# EUROPEAN PATENT APPLICATION

(11) **EP 1 909 244 A1**
(43) Date of publication of application: **09.04.2008**
(21) Application number: 06781383.2
(22) Date of filing: 20.07.2006
(51) Int. Cl.: G08C 13/00

(54) **EXECUTION DEVICE**

(30) Priority: 22.07.2005 JP 2005212160
(71) Applicant: MATSUSHITA ELECTRIC INDUSTRIAL CO., LTD., Osaka 571-8501 (JP)
(72) Inventor: MIYATAKE, Kazufumi c/o Matsushita Electric Industrial Co. Ltd, 2-1-61, Shiromi, Chuo-ku,Osaka 540-6207 (JP); NAKAMURA, Tomonori c/o Matsushita Electric Industrial Co. Ltd, 2-1-61, Shiromi, Chuo-ku,Osaka 540-6207 (JP); OHTO, Hidetaka c/o Matsushita Electric Industrial Co. Ltd, 2-1-61, Shiromi, Chuo-ku,Osaka 540-6207 (JP)
(74) Representative: Zimmer, Franz-Josef
(86) International application number: PCT/JP2006/314428
(87) International publication number: WO 2007/011001

(57) **Abstract**

A program execution apparatus executes an application program that is written in an object-oriented language and includes one or more classes, each of which includes execution code. The program execution apparatus includes a first execution device having a memory and a processor and a tamper-resistant second execution device having a memory and a processor. In the execution of a class, a loader loads the execution code of the class into the memory of the second execution device and loads a portion of the class other than the execution code loaded into the memory of the second execution device, into the memory of the first execution device, after which the class is executed.

## Description

### TECHNICAL FIELD

The present invention relates to technology for preventing eavesdropping on and tampering with a program, and in particular to technology for preventing a program from being analyzed, tampered with, etc. when executed.

### BACKGROUND ART

In recent years, various application programs (hereinafter, called "applications") have been executed by personal computers and other devices that have an information processing function, such as digital televisions and mobile phones. Such applications are, for example, downloaded from a server on the Internet via a program distribution service.
There are intellectual property rights such as copyrights, and various other rights on such applications.

However, there are cases in which an application is tampered with and data is stolen, and these sorts of actions must not be allowed in view of the rights on the application.
Conventionally, various methods have been used to protect applications from such wrongful actions, one example of which is a method of complexifying the program itself of an application.

Normally, when performing a wrongful action such as tampering with a program, the program is, for example, analyzed with the use of a tool such as a debugger during execution on a memory. Protection of the program is attempted by complexifying the program to make analysis thereof difficult.
As one method of complexifying the program of an application, there is disclosed a method of complexifying data and expressions in a program to be loaded into a memory during execution (see patent document 1 and Fig.29).

Specifically, in a CPU (Central Processing Unit) 200 that realizes the above method, a data determination unit 202 determines a portion of data in an encoded program, a data encoding unit 203 encodes the determined data portion by a method determined by an encoding rule determination unit 201, an expression conversion unit 204 complexifies expressions that use the encoded data, and the CPU 200 loads the encoded data and the complexified expressions into a memory. The data that requires decoding is decoded by a decoding processing unit 205.

This method enables making the data and algorithms of a program on a memory, that is to say, a program being executed, difficult to decipher.
*Patent document 1:* Japanese Patent Application Publication No. 2005-49925

### DISCLOSURE OF THE INVENTION

### PROBLEMS SOLVED BY THE INVENTION

Although able to make analysis difficult, complexifying a program has the disadvantage that, given enough time, the program can eventually be analyzed. Also, even a complexified program can be executed without any problems if copying is possible.
In order to prevent analysis, copying, etc., it is desirable for the application and execution environment thereof to be executed on a memory in a tamper-resistant device. However, this is often not realistic in terms of size, cost, etc.

In particular, if the execution environment is a virtual machine, the program of the virtual machine is normally very large, which makes the above all the more unrealistic.
Therefore, an aim of the present invention to provide an execution apparatus that enables preventing wrongful actions such as analysis from being performed on critical portions of an application program, without complexifying the program itself of the application or requiring a large tamper-resistant device.

### MEANS TO SOLVE THE PROBLEMS

In order to solve the above problem, the present invention is a program execution apparatus for executing an application program that is written in an object-oriented language and includes one or more classes, each including execution code, including: a first execution device including a memory and a processor; a tamper-resistant second execution device including a memory and a processor; and a loader operable to, in loading an execution-target class from among the one or more classes, load a portion or all of the execution code of the execution-target class into the memory of the second execution device, and load, into the memory of the first execution device, a portion of the execution-target class other than the portion or all of the execution code that was loaded into the memory of the second execution device.

### EFFECTS OF THE INVENTION

According to the above structure of the execution apparatus of the present invention, while executing a class of an application, execution code is loaded only into a tamper-resistant execution device and executed therein, thereby making it difficult to analyze and tamper with the execution code using a debugger etc. during execution, and protecting the application from wrongful actions.
Only the execution code of the class is stored in the memory of the tamper-resistant execution device, thereby reducing the size of the tamper-resistant execution device over, for example, a case in which the entire class is stored in the tamper-resistant execution device.

Also, a portion or all of the execution code of the execution-target class may have been encrypted, the program execution apparatus may further include: a decryption unit operable to decrypt encrypted information, and the loader may cause the decryption unit to decrypt the portion or all of the execution code that has been encrypted to obtain decrypted execution code, and load the decrypted execution code into the memory of the second execution device.
According to this structure, a class to be protected can be encrypted, thereby making it impossible to execute the application even if copied, protecting the application even when not being executed, and furthermore protecting the application by performing execution in the tamper-resistant execution device.

Also, one or more of the classes included in the application program may have been encrypted, the first execution device may further include a judgment unit operable to judge whether the execution-target class has been encrypted, the second execution device may further include a decryption unit operable to decrypt the encrypted execution-target class that is stored in an internal memory, the loader may include a first loader that is executed by the processor of the first execution device, and a second loader that is executed by the processor of the second execution device, the first loader may cause the judgment unit to perform the judgment, and if the execution-target class has been judged to not be encrypted, load the execution-target class into the memory of the first execution device, and if the execution-target class has been judged to be encrypted, cause the execution-target class to be stored in the memory of the second execution device, and the second loader may cause the decryption unit to decrypt the encrypted execution-target class that is stored in the memory of the second execution device to obtain a decrypted class, load a portion or all of the execution code of the decrypted class into the memory of the second execution device, and load, into the memory of the first execution device, a portion of the decrypted class other than the portion or all of the execution code that was loaded into the memory of the second execution device, in correspondence with the portion or all of the execution code of the decrypted class.

According to this structure, whether or not a class has been encrypted is judged, and in the execution of an encrypted class, decryption is performed in the tamper-resistant execution device, and only a portion of the class that does not require protection is loaded into a memory external to the tamper-resistant execution device, thereby enabling protection of the application both before and during execution of the bytecode to be protected. One exemplary method of judging whether or not a class has been encrypted involves creating in advance a class name list indicating encrypted classes, and performing the judgment based on the class name list.

Also, the program execution apparatus may further include: a control unit operable to control class execution, wherein the control unit may cause the processor of the first execution device to execute the execution-target class stored in the first execution device, and if execution-target execution code of the execution-target class is not stored in the memory of the first execution device, cause the processor of the second execution device to execute the execution code that is stored in the memory of the second execution device and that corresponds to the execution-target execution code of the execution-target class.

According to this structure, a class is split into two portions, the two portions are associated, one is stored in the memory of the normal execution device, and the other is stored in the memory of the tamper-resistant execution device, thereby enabling the processing of the class to be divided between the normal execution device and the tamper-resistant execution device. Therefore, only the protection-targeted bytecode portion of the class is stored in the memory of the tamper-resistant execution device and executed therein.

The present invention is also an execution device that is tamper resistant and is included in a program execution apparatus for executing an application program that is written in an object-oriented language and includes one or more classes, each including execution code, the execution device including: a memory; a processor; a decryption unit operable to decrypt an encrypted class that is stored in the memory; and a loader operable to cause the decryption unit to decrypt the encrypted class that is stored in the memory to obtain a decrypted class, load a portion or all of the execution code of the decrypted class into the memory, and load, in a memory external to the execution device, a portion of the decrypted class other than the portion or all of the execution code loaded into the memory, in correspondence with the execution code loaded into the memory.

The present invention is also a computer program for causing load processing to be performed by an execution device that is tamper resistant, includes a memory and processor, and is included in a program execution apparatus for executing an application program that is written in an object-oriented language and includes one more classes, each including execution code, the computer program including the steps of: decrypting an encrypted class stored in the memory; and causing the encrypted class that is stored in the memory to be decrypted in the decryption step to obtain a decrypted class, loading a portion or all of the execution code of the decrypted class into the memory, and loading, in a memory external to the execution device, a portion of the decrypted class other than the portion or all of the execution code loaded into the memory, in correspondence with the execution code loaded into the memory.

The present invention is also an integrated circuit that is tamper resistant and is included in a program execution apparatus for executing an application program that is written in an object-oriented language and includes one or more classes, each including execution code, the integrated circuit including: a memory; a processor; a decryption unit operable to decrypt an encrypted class that is stored in the memory; and a loader operable to cause the decryption unit to decrypt the encrypted class that is stored in the memory to obtain a decrypted class, load a portion or all of the execution code of the decrypted class into the memory, and load, in a memory external to the execution device, a portion of the decrypted class other than the portion or all of the execution code loaded into the memory, in correspondence with the execution code loaded into the memory.

This structure enables easily providing an execution apparatus that can prevent wrongful actions such as tampering from being performed on an application, without requiring a large tamper-resistant device.

### BRIEF DESCRIPTION OF THE DRAWINGS

Fig.1 shows the hardware and software structure of an execution apparatus of the present invention;
Fig.2 shows an exemplary program stored by a first ROM 1920;
Fig.3 shows exemplary data and programs stored by a second ROM 2920;

Fig.4 is a functional block diagram showing the structure of the execution apparatus of the present invention;
Fig.5 shows an exemplary structure of an application program 1210;
Fig.6 shows an exemplary structure and exemplary content of a protection-target class list 1220;
Fig.7 shows an exemplary structure of a class file;
Fig.8 shows the structure of sub-programs in a virtual machine 1100;
Fig.9 shows the structure of sub-programs in a bytecode processing unit;
Fig. 10 is a flowchart showing start-up processing performed by an execution apparatus 100;
Fig. 11 is a flowchart showing load processing performed by the execution apparatus 100;
Fig.12 shows a status in which a class file of a protection-target class has been loaded;
Fig.13 is a flowchart showing class execution processing performed by the execution apparatus 100;
Fig. 14 is a flowchart showing bytecode execution processing performed by the execution apparatus 100;
Fig.15 shows an exemplary Java (TM) method;
Fig. 16 shows bytecode 4100 obtained when a method 4000 is compiled;
Fig.17 shows an exemplary status of a work area 1400 when Java (TM) frames have been stacked;
Fig.18 shows an exemplary status of the work area 1400 after execution of an iadd instruction;
Fig. 19 shows an exemplary status of the work area 1400 after execution of a newarray instruction;
Fig.20 shows an exemplary status of the work area 1400 after execution of an areturn instruction;
Fig.21 is a functional block diagram showing an exemplary structure of an execution apparatus 500 of embodiment 2;
Fig.22 is a flowchart showing load processing performed by the execution apparatus 500;
Fig.23 shows a status in which a class file of a protection-target class has been loaded;
Fig.24 shows exemplary bytecode;
Fig.25 shows an example of split bytecode;
Fig.26 is a flowchart showing class execution
processing performed by the execution apparatus 500 of embodiment 2;
Fig.27 shows an exemplary structure of an execution apparatus 800 of embodiment 3;
Fig.28 is a flowchart showing class execution processing performed by the execution apparatus 800 of embodiment 3; and

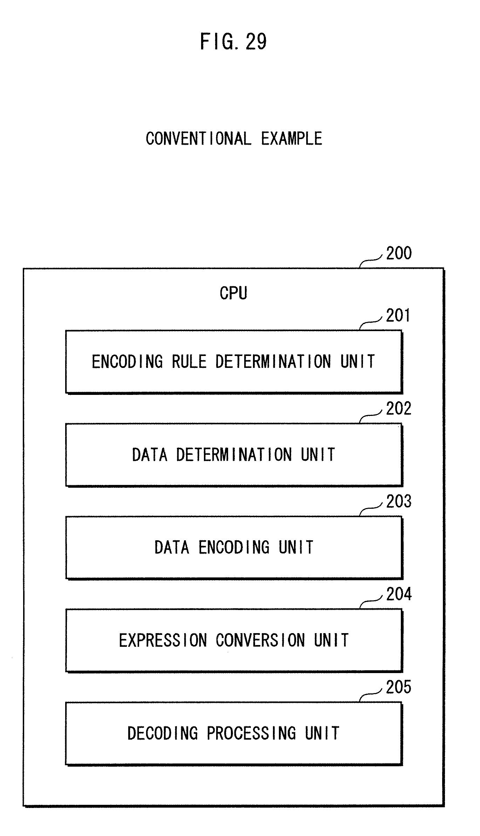

Fig.29 shows the structure of a conventional technology.

### DESCRIPTION OF THE CHARACTERS

100, 500 execution apparatus
1000, 5000 normal execution unit
1010 application acquisition program
1200 application program storage unit
1210 application program
1100, 5100 virtual machine
1110, 5110 interpreter
1120, 5120 loader
1020, 8100 OS
1300 class storage unit
1330 method meta-information
1331 bytecode split flag
1332, 2611 ID
1400, 6700 work area
1900 first CPU
1910 first RAM
1920 first ROM
2000, 6000, 8000 protected execution unit
2100, 6100 decryption processing unit
2200, 6200 bytecode processing unit
2210, 6210 secure interpreter
2220, 6220 secure loader
2600 bytecode storage unit
2610 bytecode
2900 second CPU
2910 second RAM
2920 second ROM

### BEST MODE FOR CARRYING OUT THE INVENTION

### Overview

In an execution apparatus of the present invention, focus has been placed on the fact an application can be efficiently protected by protecting a portion of programs in the application from wrongful actions.
Since various applications have different uses and aims, programs to be protected from analysis, tampering, etc., that is to say, confidential programs, differ from application to application.

The copyright of an application can be protected by, for example, preventing the analysis of and tampering with programs that execute processing of a billing function, a copyright management function such as for managing a copy count, and other functions, and preventing such functions from being disabled.
The present invention protects an application by executing only programs whose processing is cornerstone to protecting the application from wrongful actions in a tamper-resistant execution apparatus. The cornerstone processing may of course be the entire application.

The present invention makes the analysis of programs difficult by executing only the execution code of the processing of such cornerstone programs in the tamper-resistant execution apparatus.
Also, since only the application' s creator and user can know which processing of the application is cornerstone, the execution apparatus of the present invention has a function for judging which programs include cornerstone processing during execution of the application.

The following describes execution apparatuses pertaining to embodiments of the present invention.
The following embodiments include a description of a Java (TM) application that runs on a Java (TM) virtual machine.
Note that an execution apparatus of the present invention corresponds to a general electronic device installed with a Java (TM) virtual machine, such as a digital television, a set-top box, a car navigation terminal, a mobile phone, or a PDA (Personal Digital Assistant).

### Embodiment 1

### Structure

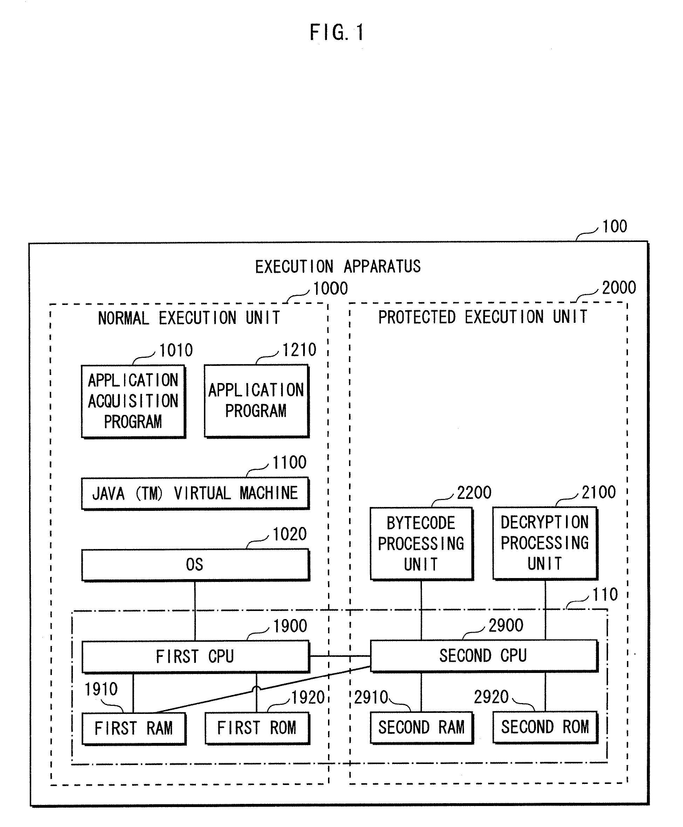

First is a brief description of the hardware and software structure of the execution apparatus of the present invention with reference to Figs.1 to 3, which is followed by a description of the structure of the functional blocks.

### Hardware and software structure

Fig.1 shows the hardware and software structure of the execution apparatus of the present invention.
An execution apparatus 100 is constituted from a normal execution unit 1000 and a protected execution unit 2000.
The normal execution unit 1000 is an execution unit that lacks any special protection, and is similar to program execution means in a normal personal computer, digital household electrical appliance, or the like. On the other hand, the protected execution unit 2000 is a tamper-resistant execution unit that can prevent eavesdropping, tampering, etc. by an unauthorized user, and safely execute a program.

In a hardware structure 110, the normal execution unit 1000 and the protected execution unit 2000 each include a CPU and memories. Specifically, the normal execution unit 1000 includes a first CPU 1900, a first RAM (Random Access Memory) 1910, and a first ROM (Read Only Memory) 1920, and the protected execution unit 2000 includes a second CPU 2900, a second RAM 2910, and a second ROM 2920.

In the present embodiment, the first RAM can be accessed by the second CPU 2900 as well.
The first and second RAMs (1910, 2910) are constituted from, specifically, primary storage memory such as SRAM or DRAM, and are used for temporarily storing data when the first and second CPUs (1900, 2900) perform processing.

Also, the first and second ROMs (1920, 2920) are constituted from, specifically, read-only non-volatile memory such as flash memory or a hard disk. The first ROM 1920 and the second ROM 2920 store programs etc. of various processing units that are run by the normal execution unit 1000 and the protected execution unit 2000 respectively.
In a software structure of the execution apparatus 100, the normal execution unit 1000 is constituted from an OS (Operating System) 1020 that is the base software, a Java (TM) virtual machine 1100, an application program 1210 executed by the execution apparatus 100, and an application acquisition program 1010 whose function is to download the application program 1210 from a device external to the execution apparatus 100.

The Java (TM) virtual machine 1100 (hereinafter, called the "virtual machine") sequentially analyzes and executes a program written in Java (TM) . In other words, the virtual machine 1100, which is a software program, simulates a CPU, and analyzes and executes Java (TM) instruction code.
The OS 1020 is a generic term for a technology constituted from kernels that execute other sub-programs in parallel, and libraries. One example of the OS 1020 is Linux. The OS 1020 executes the Java (TM) virtual machine 1100 as a sub-program.

The protected execution unit 2000 is constituted from a bytecode processing unit 2200 that controls the execution of applications in the protected execution unit 2000, and a decryption processing unit 2100 whose function is to decrypt encrypted programs.

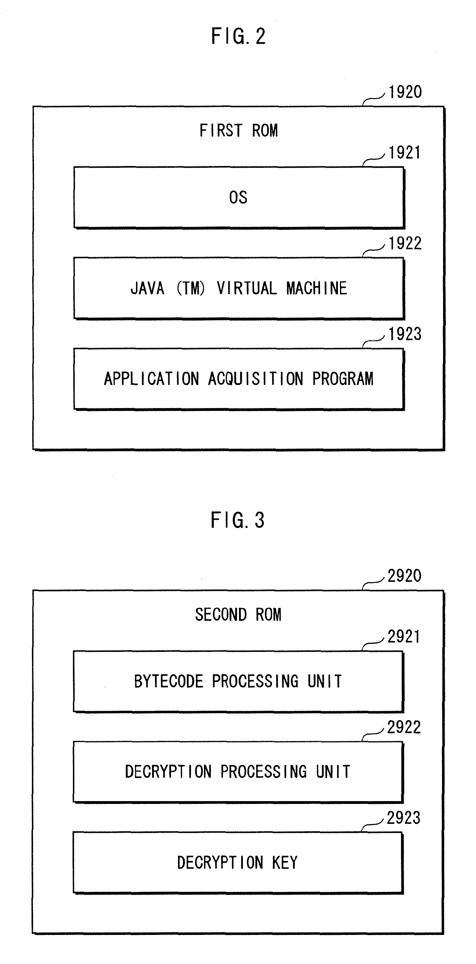

Fig.2 shows an exemplary program stored by the first ROM 1920.
The first ROM 1920 stores an OS 1921, a virtual machine 1922, and an application acquisition program 1923, which are to be loaded in the memory of the normal execution unit 1000.

Also, Fig. 3 shows exemplary data and programs stored by the second ROM 2920.
The second ROM 2920 stores programs of the bytecode processing unit 2921 and the decryption processing unit 2922, which are to be loaded in the memory of the protected execution unit 2000, and a decryption key 2923. The decryption key 2923 is used by the decryption processing unit 2100 to decrypt the encrypted application program 1210.

Note that in addition to the structures of the present invention, the execution apparatus 100 includes hardware and software for executing primary functions, such as, in the case of a television, a broadcast reception apparatus, etc.

### Structure of functional blocks

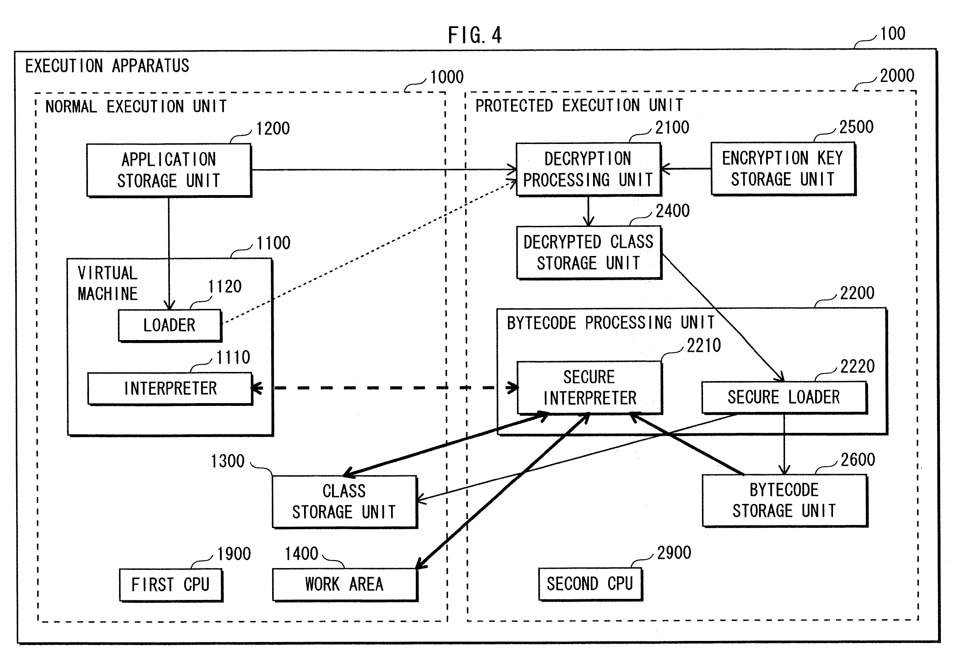

Fig.4 is a functional block diagram showing the structure of the execution apparatus of the present invention.

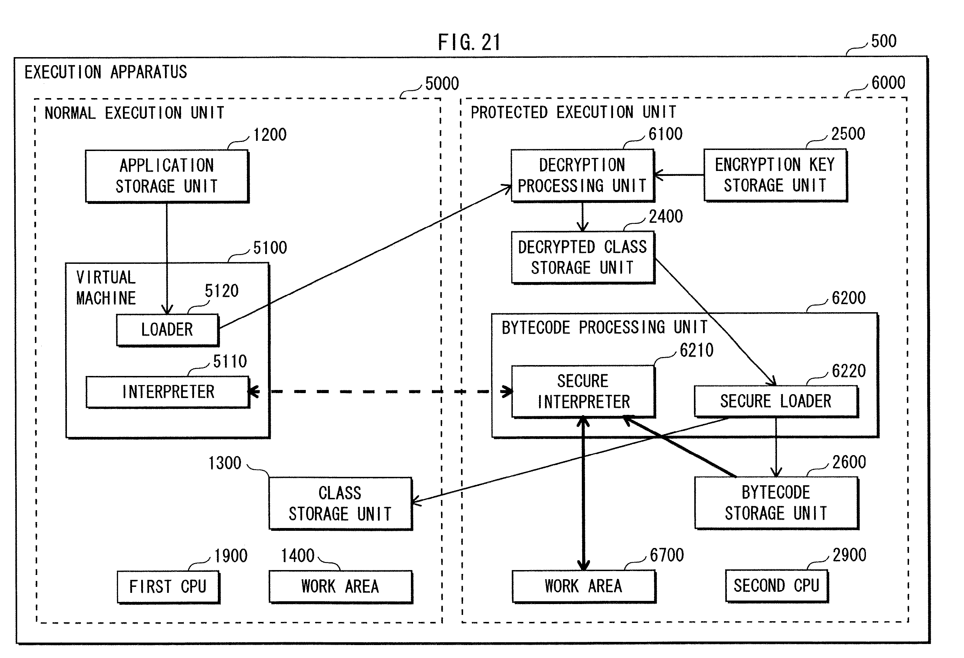

In Fig. 4, the solid arrows show the flow of data, and the dashed arrows show transitions of control. Also, the thin arrows show the flow of data etc. when a class is loaded, and the bold arrows show the flow of data etc. when a class is executed. Note that Fig. 4 only shows the flow of data etc. when an encrypted class file is executed. The same follows for Fig. 21.
As shown in Fig.1, the execution apparatus 100 is constituted from the normal execution unit 1000 and the protected execution unit 2000. Fig.1 depicts only functional units that are directly related to the description of the present embodiment.

The following description begins with the normal execution unit 1000.

### Normal execution unit

The normal execution unit 1000 includes an application storage unit 1200, the virtual machine 1100, a class storage unit 1300, a work area 1400, and the first CPU 1900.

### Application storage unit

The application storage unit 1200 stores the application program 1210, which in the present embodiment, has already been acquired by the application acquisition program 1010 (see Fig.1).

The application storage unit 1200 is reserved in the first RAM 1010.
The following describes the structure of the application program.

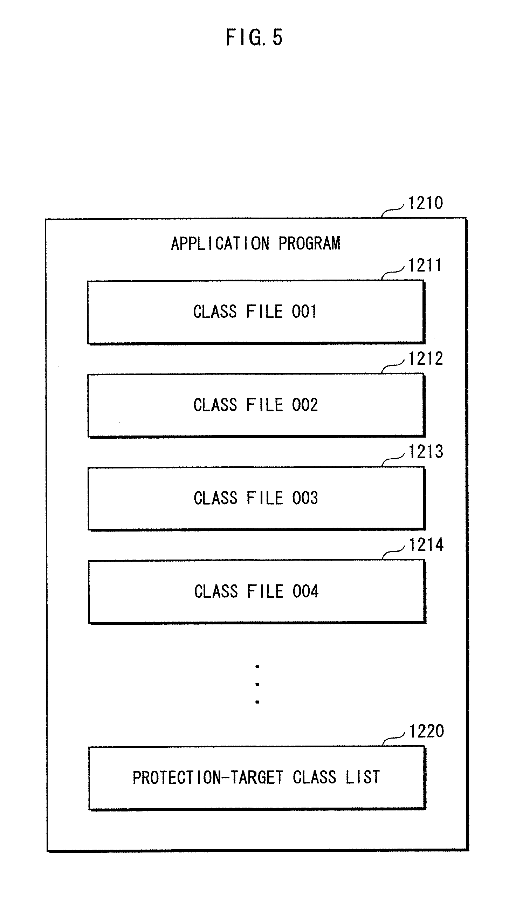

Fig. 5 shows an exemplary structure of the application program 1210.
The application program 1210 is constituted from a plurality of class files (1211 etc.) and a protection-target class list 1220.

The class files include encrypted class files and unencrypted plain-text class files. The encrypted classes are classes for performing confidential processing.
Whether or not a class file is encrypted is judged by referring to the protection-target class list 1220.

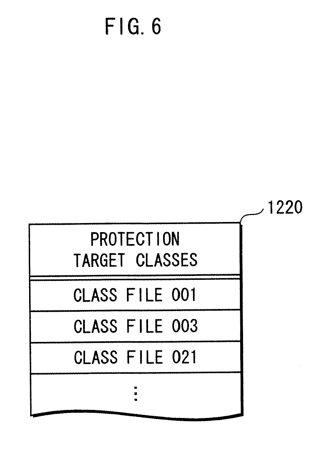

Fig.6 shows an exemplary structure and exemplary content of the protection-target class list 1220.
The protection-target class list 1220 is a list of identifiers of encrypted class files, and in the present embodiment, the identifiers are class names. The class names are stored in the constant pools of the classes, which are described later.
For example, out of "class file 001", "class file 002", ... that constitute the application program 1210, "class file 001", "class file 003", and "class file 021" are encrypted.

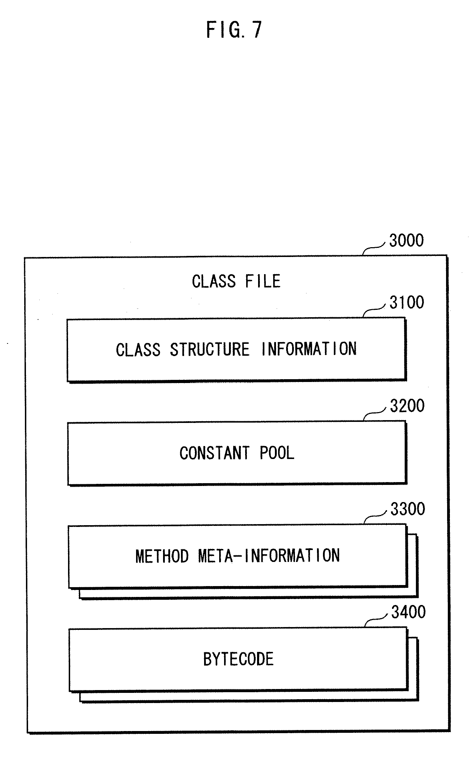

The following describes the structure of the class files with reference to Fig.7.
Fig.7 shows an exemplary structure of a class file.
A class file 3000 is constituted from class structure information 3100, a constant pool 3200, zero or more pieces of method meta-information 3300, and zero or more pieces of bytecode 3400. Although class files may include other information, this description focuses only on items related to the present invention.

The class structure information 3100 is information regarding the structure of the class, such as the fields and methods retained in the class, and inheritance with respect to other classes.
The constant pool 3200 is information indicating the names of fields and methods defined in the class or referred to in other another class.
The method meta-information 3300 is information regarding methods, such as method access flags and argument sizes.

The bytecode 3400 describes processing to be executed in the class.
A source program written in Java (TM) is converted to bytecode by a bytecode compiler. Bytecode is intermediate code that is not dependent on hardware.
The method meta-information 3300 and the bytecode 3400 exist in one-to-one correspondence with methods belonging to the class. In other words, the class file includes the same number of pieces of method meta-information 3300 and bytecode 3400 as there are methods.

In the following, the class structure information 3100, the constant pool 3200, and the method meta-information 3300 are collectively called "meta information".

### Virtual machine

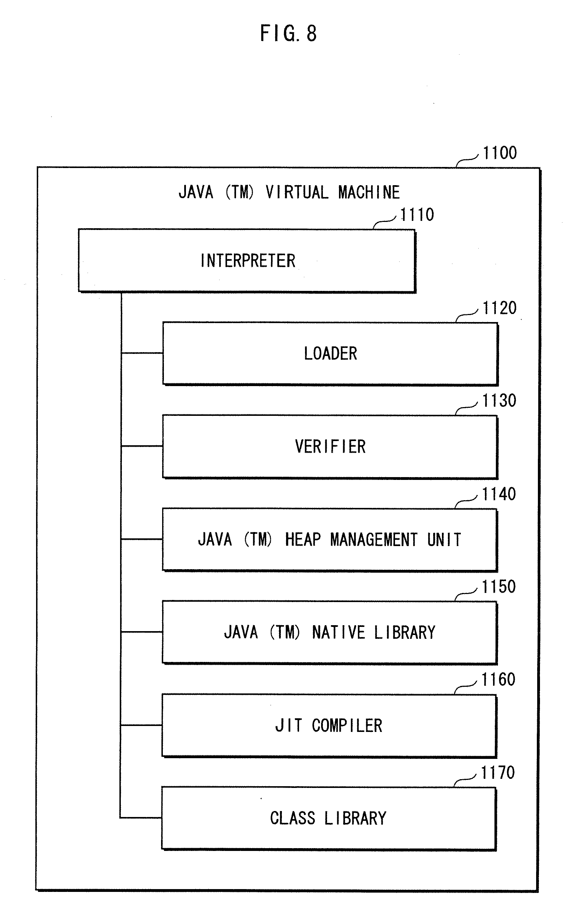

Although the virtual machine 1100 is constituted from a plurality of sub-programs, only the loader 1120 and the interpreter 1110 that have functions unique to the present invention are shown in Fig.8.

The following describes the virtual machine 1100 with reference to Fig.8.
Fig.8 shows the structure of sub-programs in the virtual machine 1100.
The virtual machine 1100 is constituted from the interpreter 1110, the loader 1120, a verifier 1130, a Java (TM) heap management unit 1140, a Java (TM) native library 1150, a JIT compiler 1160, and a class library 1170.

The interpreter 1110 is a sub-program that interprets and executes the bytecode included in a class file, and performs core processing in the virtual machine 1100.
The interpreter 1110 of the present invention has an additional function of, during class execution, detecting whether bytecode to be executed is stored in the protected execution unit, and passing control.

The loader 1120 searches the application program 1210 for the class file of the class to be executed, and loads the found class file into the virtual machine 1100. Here, the class is put into an executable status before being loaded.
The loader 1120 of the present invention has an additional function of judging whether a class that is to be loaded is encrypted, and if so, requests the protected execution unit 2000 to perform the loading.

The class loader 1120 also performs class unload processing. Class unload processing is for removing, from the virtual machine 110, classes whose execution has been completed and are unnecessary.
The verifier 1130 checks for errors in the data format of the class, and checks the safety of the bytecode included in the class (see Java (TM) Virtual Machine Specification).
The class loader 1120 does not load classes that have been judged to be invalid by the verifier 1130.

The Java (TM) heap management unit 1140 manages working memory used by a Java (TM) application, which is called a Java (TM) heap. The working memory is reserved in the first RAM 1910.
The Java (TM) heap management unit 1140 also performs garbage collection. Garbage collection is processing for freeing working memory that has become unnecessary in the application execution, to enable the freed working memory to be reused for another purpose.

The Java (TM) native library 1150 is a library invoked by a Java (TM) application in order to provide the application with functions that are provided by the OS 1020, as well as hardware, sub-programs, etc. that are included in the execution apparatus 100 but not depicted in Fig.1.
The JIT compiler 1160 translates bytecode into an execution format that can be understood by the first and second CPUs 1900 and 2900.

The class library 1170 is constituted from classes necessary for execution performed by the virtual machine 1100. The classes in the class library 1170 are loaded first when the virtual machine 1100 performs execution. The class library 1170 is a portion of the virtual machine 1100, and is a collection of classes that are available to the public.

### Class storage unit

The class storage unit 1300 stores the classes of an application program that is to be executed.

The class storage unit 1300 is a so-called method area, and is actually an area in the virtual machine 1100. The class storage unit 1300 is loaded with classes that have been put into an executable status from the loader 1120.
The class storage unit 1300 is loaded with classes from the loader 1120 of the virtual machine 1100, and the later-described secure loader 2220 of the bytecode processing unit 2200.
Note that the class storage unit 1300 is reserved in the first RAM 1910, and can be referenced etc. by the protected execution unit 2000.

### Work area

The work area 1400 is a work area used when executing a class. Specifically, such a work area is called a stack, a heap, etc., and is actually an area in the virtual machine 1100.
Note that the work area 1400 is reserved in the first RAM 1910, and can be referenced etc. by the protected execution unit 2000.

### Protected execution unit

The following describes the protected execution unit 2000.
The protected execution unit 2000 includes the decryption processing unit 2100, a decrypted class storage unit 2400, an encryption key storage unit 2500, the bytecode processing unit 2200, a bytecode storage unit 2600, and the second CPU 2900.

### Decryption processing unit

In accordance with a request from the loader 1120, the decryption processing unit 2100 reads an encrypted class from the application storage unit 1200, decrypts the read class with use of an encryption key 2923 (see Fig.3) stored in the encryption key storage unit 2500, and causes the decrypted class storage unit 2400 to store the resulting decrypted class.

The size and address in the application storage unit 1200 of the class to be decrypted is received from the loader 1120 along with the request.
Note that the algorithm for encryption can be an arbitrary encryption algorithm, typical examples of which are AES (Advanced Encryption Standard) and DES (Data Encryption Standard).

### Bytecode processing unit

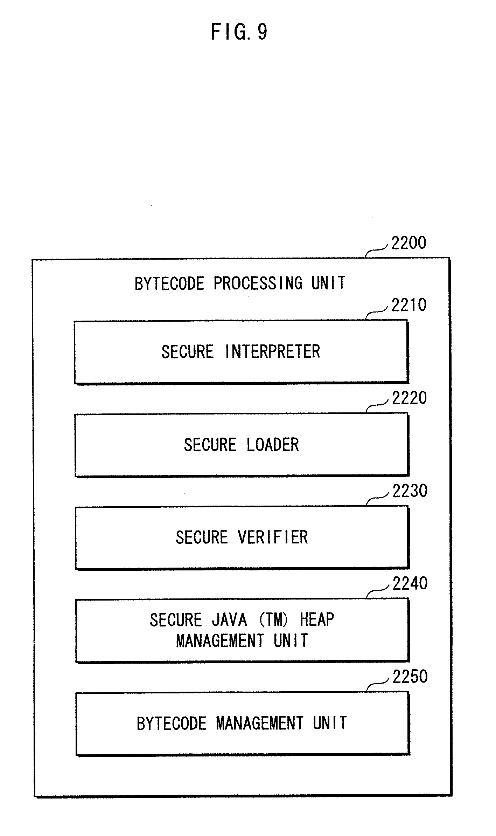

The following describes the bytecode processing unit.
The bytecode processing unit 2200 includes only the functions of the virtual machine 1100 that are necessary for the execution of bytecode. Although the bytecode processing unit 2200 includes a plurality of sub-programs, only the secure interpreter 2210 and the secure loader 2200 that have functions unique to the present invention are depicted in Fig.9.

Fig.9 shows a structure of sub-programs in the bytecode processing unit.
The bytecode processing unit 2200 includes the secure interpreter 2210, the secure loader 2220, a secure verifier 2230, a secure Java (TM) heap management unit 2240, and a bytecode management unit 2250.
The secure interpreter 2210 has functions similar to the interpreter 1110 of the virtual machine 1100. Upon receiving a request from the interpreter 1110 of the virtual machine 1100, the secure interpreter 2210 executes bytecode, and notifies the interpreter 1110 when the execution has ended.

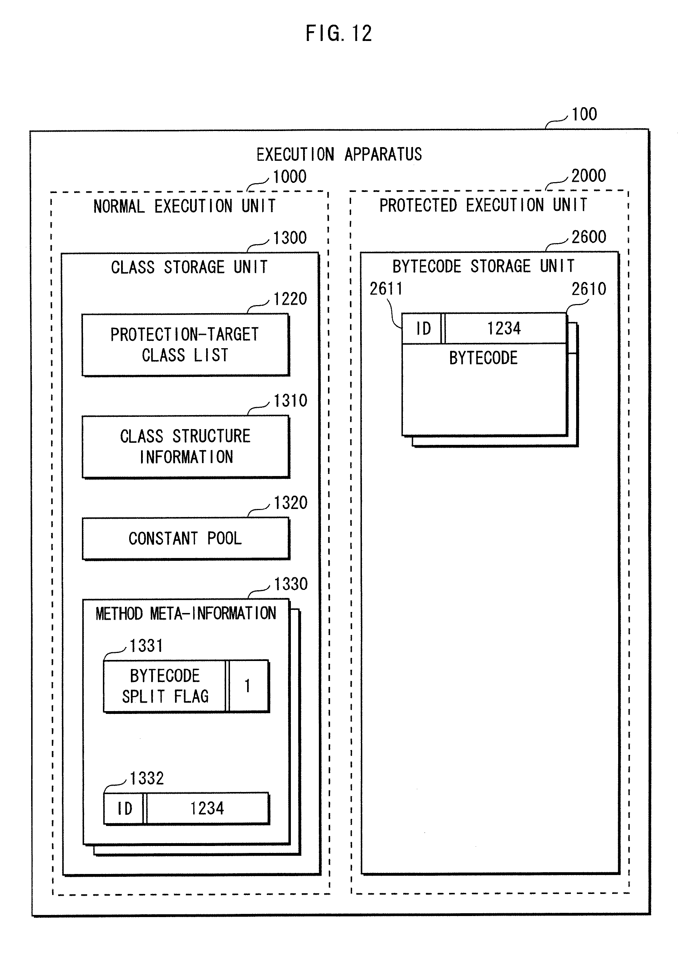

The secure loader 1110 also loads a class file from the encrypted class storage unit 2400. The secure loader 1110 splits a class, loads one portion into the bytecode storage unit 2600 of the protected execution device 2000, and loads the other portion into the class storage unit 1300 of the normal execution unit 1000.
Note that the portion stored in the bytecode storage unit 2600 and the portion stored in the class storage unit 1300 are stored in correspondence with each other. The method of correspondence is described later with reference to Fig.12.

The secure verifier 2230 has functions similar to the verifier 1130 of the virtual machine 1100.
Out of the various functions of the Java (TM) heap management unit 1140 of the virtual machine 1100, the secure Java (TM) heap management unit 2240 has only the function of unloading bytecode during the unloading of a class. This is because data other than bytecode exists in the memory of the normal execution unit 1000 and is managed by the virtual machine 1100.

The bytecode management unit 2250 manages bytecode in association with meta information that is stored in the normal execution unit 1000 and is necessary for the execution of a class in the protected execution unit 2000. Specifically, the bytecode management unit 2250 manages the bytecode to be stored in the bytecode storage unit 2600 and the method meta-information to be stored in the class storage unit 1300 in one-to-one correspondence by attaching the same identifier to each (see Fig.12).

### Bytecode storage unit

The bytecode storage unit 2600 stores only the bytecode of a class in the application program to be executed (see Fig.7).
The bytecode storage unit 2600 is a so-called method area, and is actually an area in the bytecode processing unit 2200. The bytecode storage unit 2600 is loaded with bytecode by the secure loader 2220, and stores the bytecode of a class that has been put into an executable status.

Note that the bytecode storage unit 2600 is reserved in the second RAM 2910. The bytecode storage unit 2600 therefore cannot be referenced by the normal execution unit 1000.

### Operations

The following describes operations of the execution apparatus 100 when executing an application.
The operations of the execution apparatus 100 are described below in two phases, namely application loading and application execution.

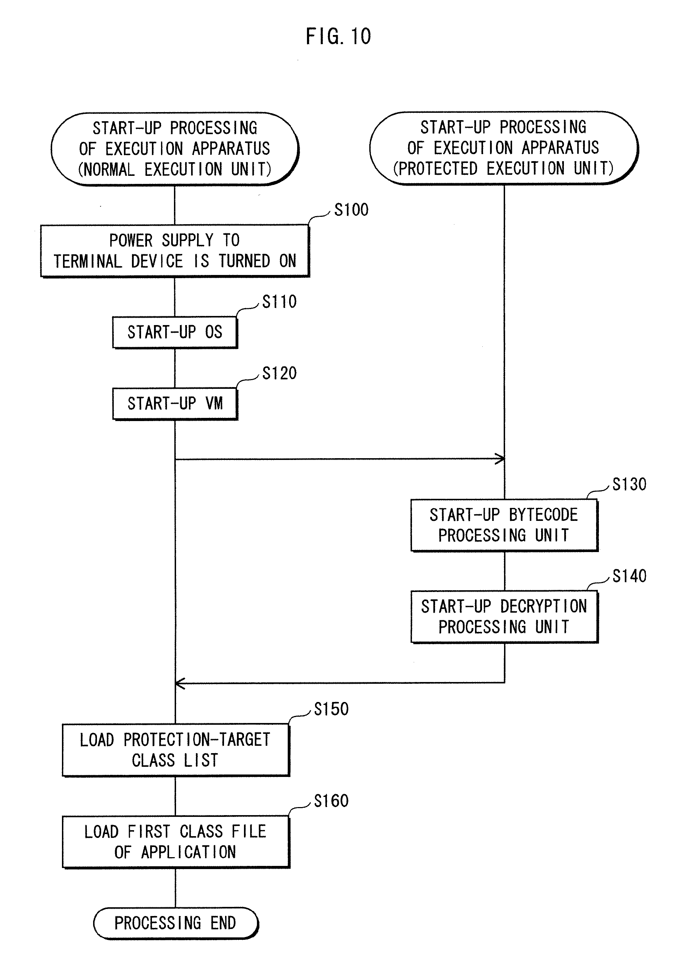

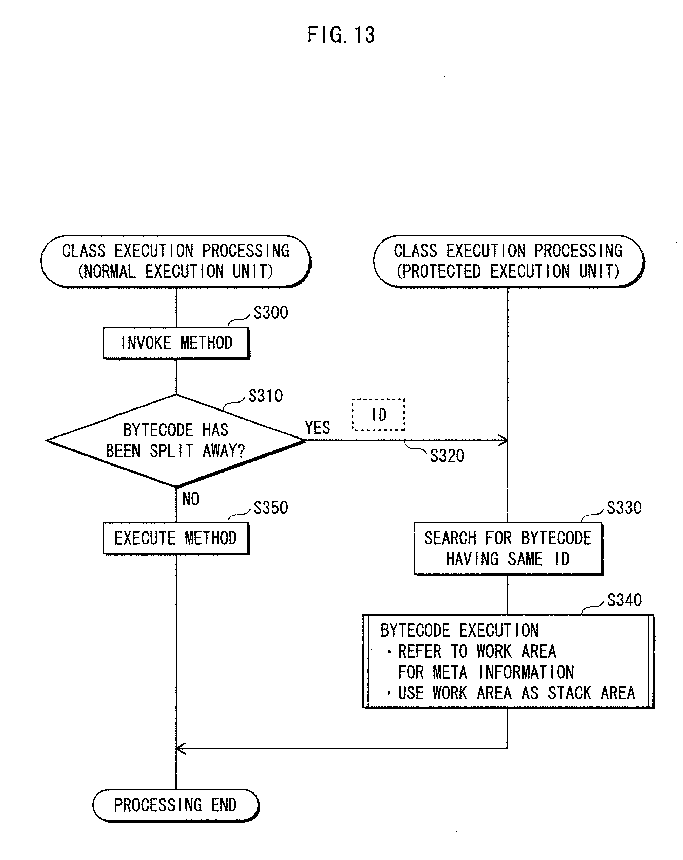

The following describes class load processing with reference to Fig. 10 to Fig. 12, and class execution processing with reference to Fig.13 to Fig.20.

### Class load processing

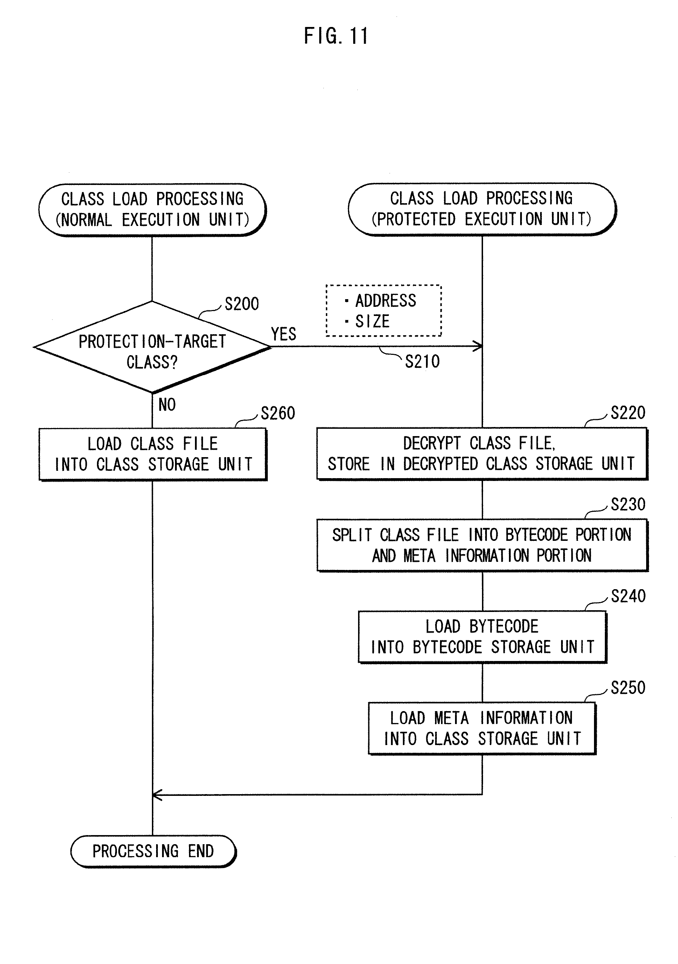

The following first describes class load processing with reference to Fig.10, or more specifically, processing from the introduction of power supply until the execution apparatus 100 starts the application program 1210, and then processing for loading a class, with reference to Fig.11 and Fig.12.

In the present embodiment, a pre-set application is executed when power supply is introduced to the execution apparatus.
Fig.10 is a flowchart showing start-up processing of the execution apparatus 100.
When the user introduces a power supply to the execution apparatus 100 (step S100), the first CPU 1900 loads the OS 1921 (see Fig.2) stored in the first ROM 1920 into the first RAM 1910, and starts the OS 1020 (step S110).

Next, the OS 1020 loads the Java (TM) virtual machine 1922 stored in the first ROM 1920 into the first RAM 1910, and starts the virtual machine 1100 (step S120).
Then, the OS 1020 notifies a load request to the second CPU 2900 via the first CPU 1900, and the second CPU 2900 loads the bytecode processing unit 2921 stored in the second ROM 2900 into the second RAM 2910, and starts the bytecode processing unit 2200 (step S130).

Then, the second CPU 2900 loads the decryption processing unit 2922 (see Fig.3) stored in the second ROM 2900 into the second RAM 2910, and starts the decryption processing unit 2100 (step S140).
As a result of the above processing, the execution apparatus 100 enters an application executable status. Note that the start-up of the virtual machine 110 (step S120) and the start-up of the decryption processing unit 2100 and bytecode processing unit 2200 (steps S130 and S140) may be performed in reverse order.

After the execution apparatus 100 enters the state in which the application program 1210 can be executed, the virtual machine 1100 begins executing the application program 1210.
The execution of the application program 1210 is begun by executing a designated class file thereof. The name of the designated class file is pre-stored in the virtual machine 1100.

The application is executed by the loader 1120 loading the first class, and the interpreter beginning to execute the first class, whereafter necessary class files are loaded at appropriate timings and executed.
Before the designated class file is first loaded (step S160), the virtual machine 1100 causes the designated class file and the protection-target class list 1220 included in the application program 1210 to be stored in the class storage unit 1300 (step S150).

The following describes processing for loading classes, that is to say, processing in which the virtual machine 1110 converts class files of the application program 1210 into an executable internal format, and loads the converted class files.
Fig. 11 is a flowchart showing load processing performed by the execution apparatus 100. The load processing is processing performed by the loader 1120 of the normal execution unit 1000 and the secure loader 2220 of the protected execution unit 2000.

Also, Fig.12 shows a status in which a class file of a protection-target class has been loaded.
First, the interpreter 1110 transfers a class file name and a load request to the loader 1120. Upon receiving the request, the loader 1120 judges whether the transferred class file name indicates a protection-target class, that is to say, an encrypted class (step S200).

This judgment is performed by checking whether the transferred class file name is included in the protection-target class list 1220 stored in the class storage unit 1300, and if so, judging that the indicated class is a protection-target class.
If the class whose loading has been requested is judged to not be a protection-target class (step S200:NO), the loader 1120 loads the class into the class storage unit 1300 (step S260).

However, if the class whose loading has been requested is judged to be a protection-target class (step S200:YES), the loader 1120 notifies the size and address in the application storage unit 1200 of the class to the decryption processing unit 2100 of the protected execution unit 2000 along with a load request (step S210).
Upon receiving the notification, the decryption processing unit 2100 reads the class file from the application storage unit 1200, decrypts the class file with use of a decryption key 2923 stored in the encryption key storage unit 2500, and stores the resulting decrypted class file in the decrypted class storage unit 2400 (step S220). Hereinafter, the class stored in the decrypted class storage unit 2400 is called the "decrypted class file".

Upon generating the decrypted class file, the decryption processing unit 2100, notifies the bytecode processing unit 2200 to that effect.
Upon receiving the notification, the bytecode processing unit 2200 causes the secure verifier 2230 to check the decrypted class file, and requests the secure loader 2220 to load the decrypted class file.
Upon receiving the request, the secure loader 2220 analyzes the syntax of the decrypted class file, distinguishes between the bytecode portion and the meta information portion based on tags in the decrypted class file, and splits the decrypted class file into the bytecode portion and the meta information portion (step S230). When this split is performed, the secure loader 2220 attaches two pieces of information. The first information piece indicates that the bytecode has been split, and the second information pieces indicates the correspondence between the bytecode portion and the meta information portion. The pieces of attached information are described later with reference to Fig.12.

After the split, the secure loader 2220 loads the bytecode portion into the bytecode storage unit 2600 (step S240), and loads the meta information portion into the class storage unit 1300 of the normal execution unit 1000 (step S250). Note that both of the portions are in a format executable by the virtual machine 1100.
Fig.12 shows a status in which the bytecode and meta information portions have been loaded in the respective storage units. The bytecode storage unit 2600 of the protected execution unit 2000 is loaded with the bytecode 2610, and the class storage unit 1300 of the normal execution unit 1000 is loaded with the class structure information 1310, the constant pool 1320, and the method meta-information 1330.

Since the format of the class file (see Java (TM) Virtual Machine Specification) guarantees that the bytecode 3400 comes after the method meta-information 3300 (see Fig. 7), the portions can be easily distinguished from each other, and the bytecode 3400 portion and the meta information (see Fig.7: 3100, 3200, 3300) portion can be split from each other.

When the split is performed (see Fig.11: step S230), the secure loader 2220 attaches information indicating that the bytecode has been split and information associating the bytecode portion and the meta information portion with each other.
The secure loader 2220 attaches a bytecode split flag 1331, which is a flag indicating a split portion of information, as the information indicating that the bytecode has been split. In the present embodiment, a value of "1" for the bytecode split flag 1331 indicates that a split has been performed, and a value of "0" indicates that a split has not been performed.

The value of "0" for the bytecode split flag 1331 indicates that the bytecode is stored in the class storage unit 1300, and a value of "1" indicates that the bytecode is stored in the bytecode storage unit 2600.
Next, the secure loader 2220 attaches the information associating the bytecode portion and the meta information portion with each other. The secure loader 2220 instructs the bytecode management unit 2250 to attach this information.

The bytecode management unit 2250 attaches an ID 2611 to the bytecode 2610, and an ID 1332 having the same value to the method meta-information 1330 to enable identifying the relationship between the bytecode 2610 and the method meta-information 1330. It is necessary for the same value to be indicated by the ID 1332 of the method meta-information 1330 and the ID 2611 of the bytecode 2610 that have been converted from the same method into an internal format.

For example, by setting both the ID 2611 of the bytecode 2610 and the ID 1332 of the method meta-information 1330 to "1234", it is possible to know that the method meta-information 1330 should be referenced when executing the bytecode 2610. It is therefore necessary for each piece of method meta-information 1330 to have a different ID value.
However, if the class file to be loaded is judged to not be a protection-target class (step S200:NO), the loader 1120 sets the bytecode split flag 1331 of the method meta-information in the class loaded in the class storage unit 1300 to "0". Note that the loader 1120 does not set the ID 1332 of the method meta-information 1330 to any value.

The secure verifier 2230 checks the decrypted class file, and if an error is detected, notifies the loader 1120 to that effect. Thereafter, the load processing ends.

### Class execution processing

The following describes the class execution processing with reference to Fig.13 to Fig.20.
Fig.13 is a flowchart showing the class execution processing.

First, in the execution of a class, the interpreter 1110 invokes a method (step S300).
The interpreter 1110 judges whether the bytecode of the invoked method has been split away into a separate portion, that is to say, whether the bytecode is stored in the class storage unit 1330 and can be executed by the normal execution unit 1000 (step S310).

The interpreter 1110 performs this judgment by checking the bytecode split flag 1331 of the method meta-information 1330.
If the value of the bytecode split flag 1331 is "0" (step S310:NO), the bytecode has not been split away into a separate portion, and therefore the interpreter 1110 executes the method (step S350). The processing by which the interpreter 1110 executes the method is the same as the operations of a conventional Java (TM) virtual machine (see Java (TM) Virtual Machine Specification).

Next, if the value of the bytecode split flag 1331 is "1" (step S310:YES), the interpreter 1110 invokes an execution environment transition coefficient, which is provided in the OS 1020, for invoking the bytecode processing unit 2200 of the protected execution unit 2000, and requests the bytecode processing unit 2200 to execute the bytecode. For example, the bytecode processing unit 2200 periodically monitors a specified bit in the first RAM 1910, and begins processing when the specified bit of the execution environment transition coefficient becomes "1".

When the interpreter 1110 invokes the execution environment transition coefficient, the value of the ID 1332 (see Fig. 12) is passed as the argument of the execution environment transition coefficient (step S320).
The secure interpreter 2210 of the bytecode processing unit 2200 that received the request passes the received ID 1332 value to the bytecode management unit 2250, and requests the bytecode management unit 2250 to search for bytecode having the same ID value.

Upon receiving the request, the bytecode management unit 2250 searches the bytecode storage unit 2600 for the bytecode 2610 whose ID 2611 value is the same as the ID 1332 value, and transmits the address of the bytecode to the secure interpreter 2210 (step S330).
Upon receiving the address of the bytecode, the secure interpreter 2210 executes the bytecode (step S340).

When performing the execution, the secure interpreter 2210 refers to the class storage unit 1300 for the metal information necessary for the execution, and uses the work area 1400 as the stack area and heap area.
The following describes a concrete example of a case of executing the bytecode of a protection-target class.

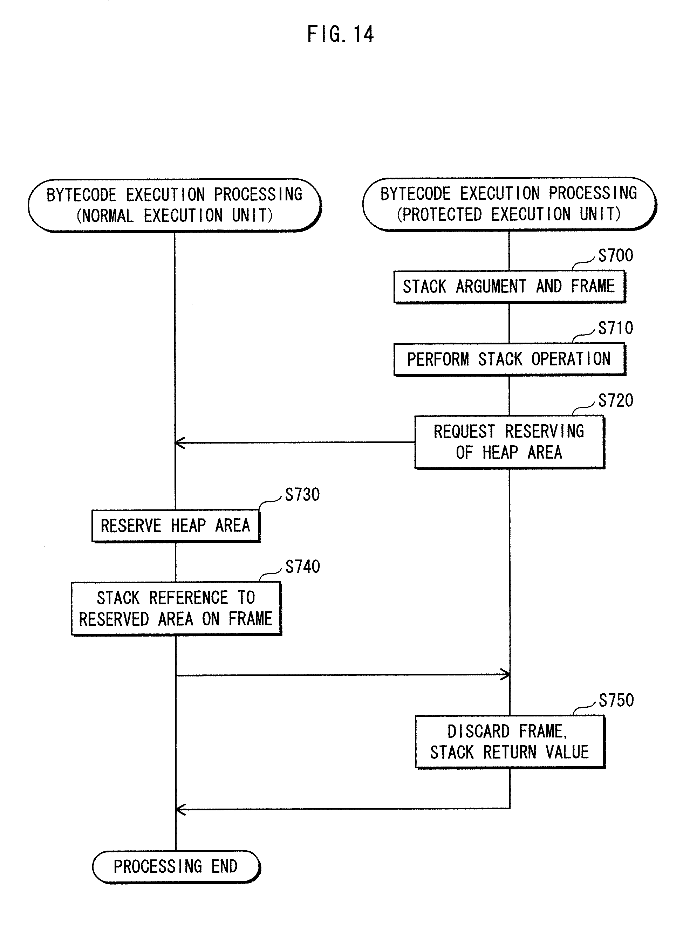

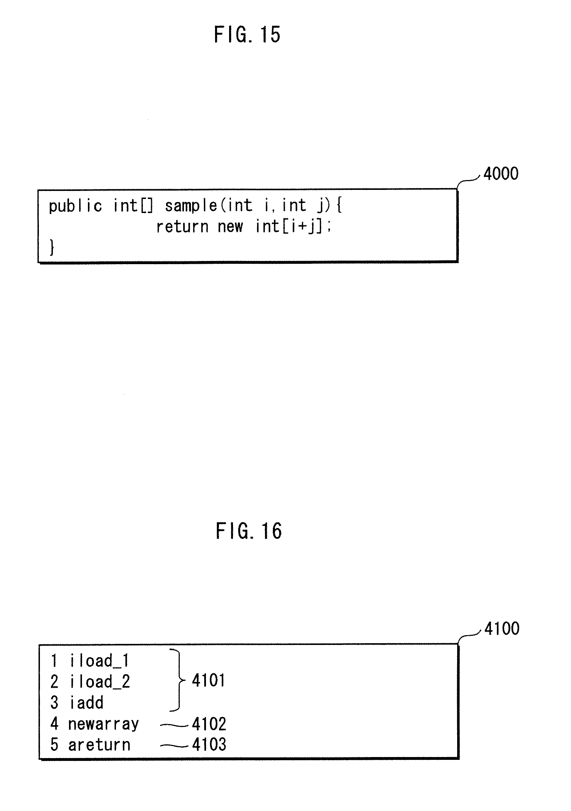

Fig.14 is a flowchart showing bytecode execution processing. The flowchart of Fig.14 shows a case of executing a method 4000, which is written in Java (TM), shown in Fig.15, and the following describes an example of executing the method 4000.

Here, the method 4000 is a method in the class file of the protection-target class 1220. The bytecode of this method is therefore stored in the bytecode storage unit 2600. Fig. 16 shows bytecode 4100 obtained by compiling the method 4000.
A program of the method 4000 is for loading two int type values as arguments, generating an int type array whose size is the sum of the two values, and setting the generated int type array as a return value.

The following describes operations performed when executing the bytecode 4100, with reference to the flowchart of Fig. 14, and Figs. 17 to 20 that show transitions of a frame area and a heap area.
The secure interpreter 2210 first creates a frame 1430 in a frame area 1420 in the work area 1400 of the normal execution unit 1000. Specifically, the secure interpreter 2210 stacks Java (TM) frame 1430 of the method 4000 to be presently executed, on an invoker Java (TM) frame 1440 (step S700) .

The invoker Java (TM) frame 1440 is the Java (TM) frame of the method that invoked the method 4000 to be presently executed, and all frames have a similar structure.

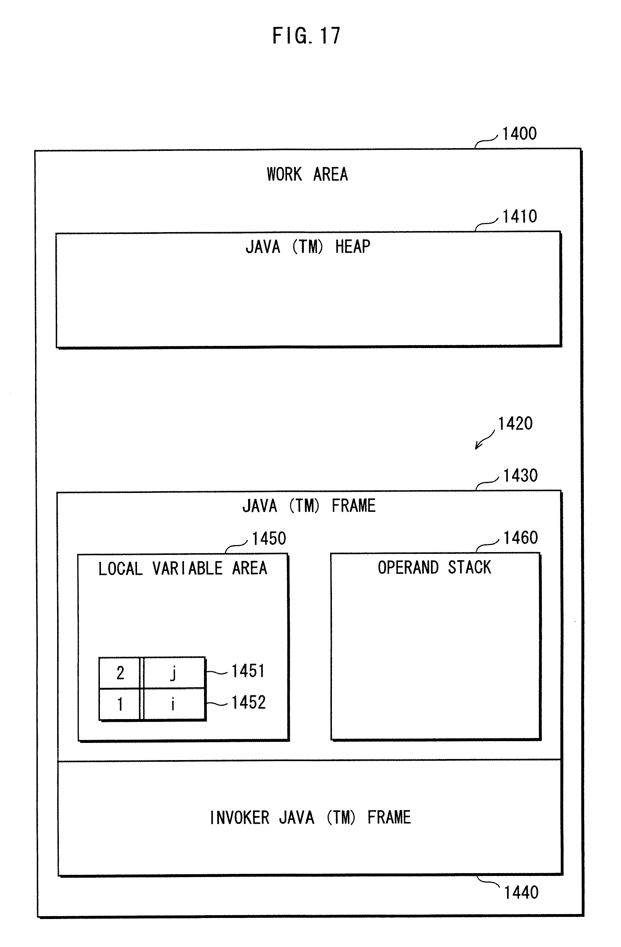

Fig. 17 shows the status of the work area 1400 when the secure interpreter 2210 has stacked the Java (TM) frame to be presently executed.

A Java (TM) heap 1410, the Java (TM) frame 1430, and the invoker Java (TM) frame 1440 are generated in the work area 1400.
The Java (TM) heap 1410 is working memory used by the virtual machine 1100, and is managed by the Java (TM) heap management unit 1140 (see Fig.8).
The Java (TM) frame 1430 is working memory for the method to be presently executed by the secure interpreter 2210, and is constituted from a local variable area 1450 and an operand stack 1460.

The local variable area 1450 is an area storing local variables of the method. When the secure interpreter 2210 generates the Java (TM) frame 1430, the local variable area 1450 is loaded with the two int type values "i" and "j", that were given as arguments, as a first local variable (1452) and a second local variable (1451) respectively.
The operand stack 1460 is a stack for performing operations executed by the method, and is used in the following way. For example, if the method includes code for adding local variables, data from the local variable area 1450 is loaded into the operand stack 1460, the local variables are added on the operand stack 1460, and the result is stored in the local variable area 1450.

Upon stacking the argument on the frame, the secure interpreter 2210 begins the processing of the bytecode 4100.
Code 4101 in lines 1 to 3 of the bytecode 4100 is a stack operation, and processing thereof proceeds as described below (step S710).
An iload instruction is an instruction for loading the values of variables in the local variable area onto the operand stack. Also, an iadd instruction is an instruction for adding two values stacked on the operand stack.

In "iload_1" and "iload_2", the values of "i" 1452 and "j" 1451 passed as arguments are stacked onto the operand stack 1460, and the values of i and j are added together.
An addition result "i + j" 1461 is stacked on the operand stack 1460. At this time, the stacked arguments "i" and "j" are deleted.

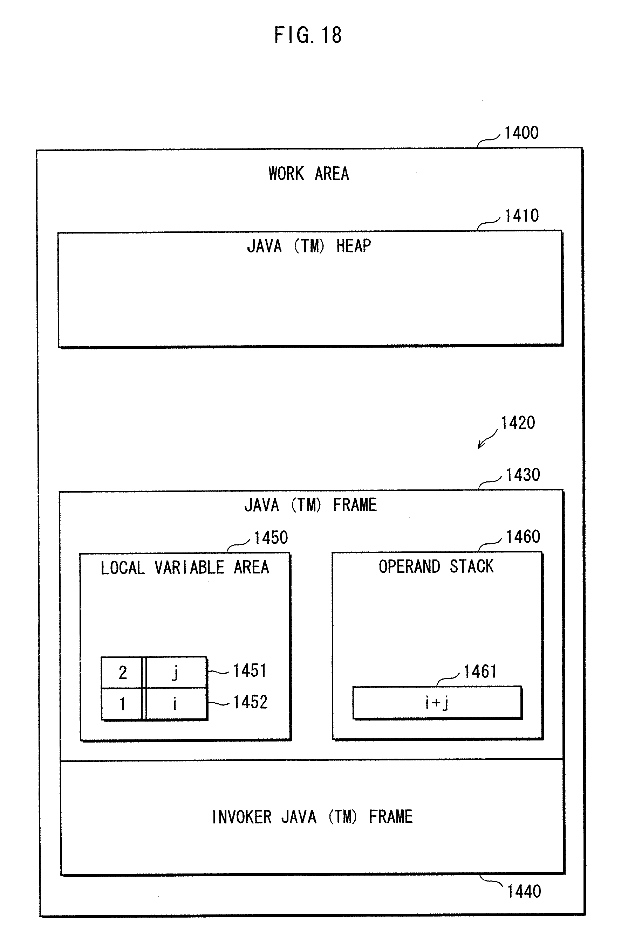

Fig.18 shows the resulting status of the work area 1400.
Next, the secure interpreter 2210 executes a code "newarray" 4102 of the bytecode 4100.
A newarray instruction is an instruction for reserving, in the Java (TM) heap 1410, an area for an array whose element count is the same as the value at the top of the operand stack.

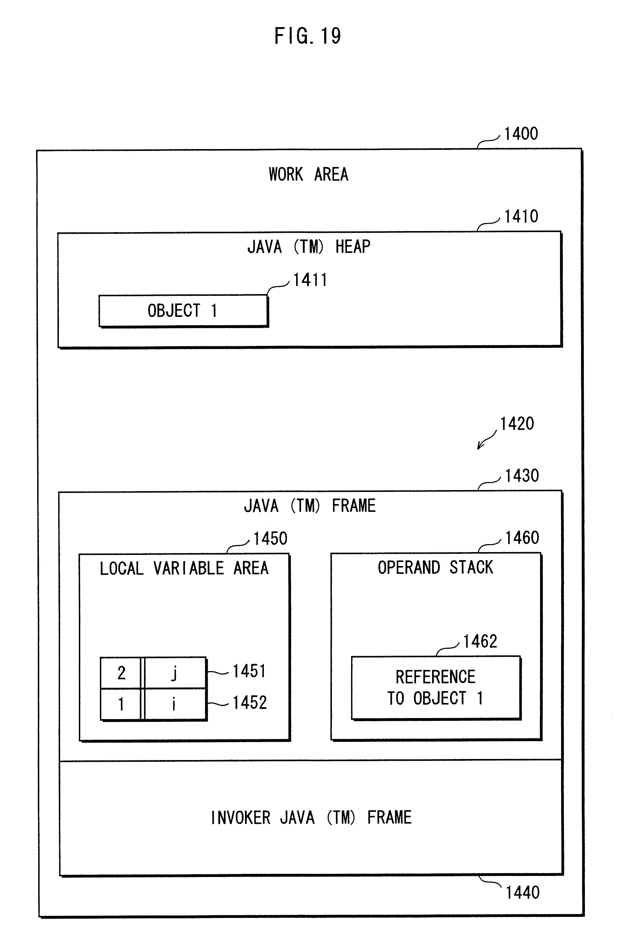

Fig. 19 shows a status of the work area 1400 when the aforementioned area has been reserved.

In a newarray instruction, it is necessary to use a lock function provided by the OS 1020 of the normal execution unit 1000 to lock the Java (TM) heap before reserving the aforementioned area, in order to prevent another thread from performing writing in the Java (TM) heap at the same time.
Since the secure interpreter 2210 cannot directly use the lock function provided by the OS 1020 of the normal execution unit 1000, after fetching "newarray" 4102, the secure interpreter 2210 retrieves the value of "i + j" 1461 at the top of the operand stack 1460 (see Fig. 18), and using this value as an argument, invokes the Java (TM) heap management unit 1140 of the virtual machine 1100 (step S720) .

The Java (TM) heap management unit 1140 uses the lock function provided by the OS 1020 to lock the Java (TM) heap 1410.
After confirming the lock, the Java (TM) heap management unit 1140 reserves, in the Java (TM) heap 1410, an object 1 (1411) whose size is the value of "i + j" that was received as an argument (step S730), and stacks a reference 1462 to the object on the operand stack (step S740, see Fig.19).

Fig.19 shows the status of the work area 1400 at this point.
After area reserving has ended, processing is reverted to the secure interpreter 2210, which begins processing after "newarray" 4102.
The secure interpreter 2210 performs the processing of "areturn" 4103 of the bytecode 4000.

The processing of the current method ends when "areturn" 4103 has been fetched, and thereafter the secure interpreter 2210 discards the Java (TM) frame 1430, which is the working memory for the method 4000, and stacks the top value of the operand stack 1460 and a reference 1442 to the object 1 on the invoker Java (TM) frame 1440 (step S750) .

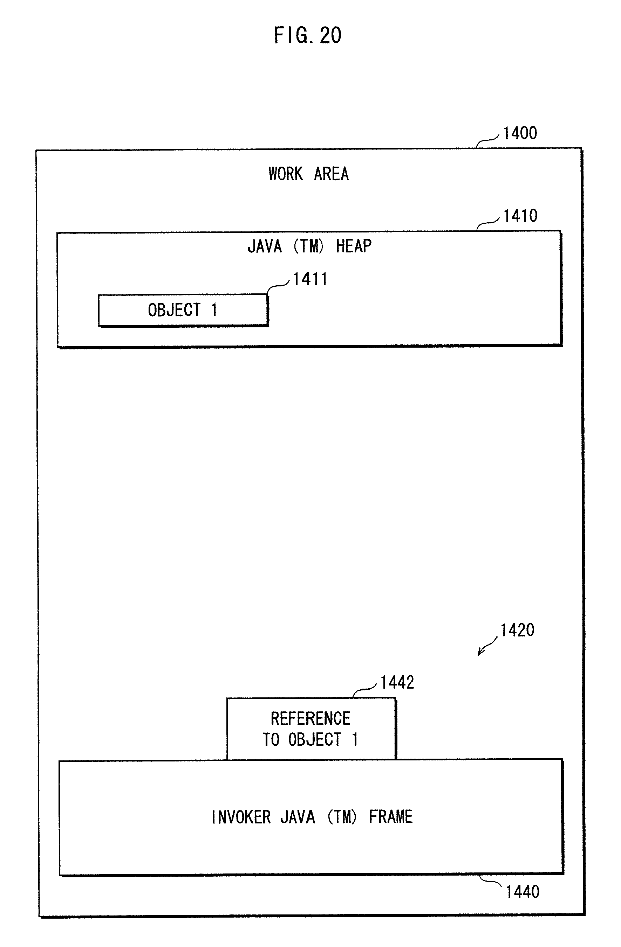

Fig.20 shows the state of the working area 1400 at this point.
Lastly, the secure interpreter 2210 returns the processing to the interpreter 1110.
Here, the execution of the bytecode 41000 ends, and the normal execution unit 1000 can continue on to the next processing.
As in the above-described example, if the bytecode includes processing that cannot be processed in the protected execution unit 2000 during execution, the normal execution unit 1000 performs such processing. In such a case, the bytecode itself is protected.

Although the above describes a case using an example of a newarray instruction and in which processing moves from the secure interpreter 2210 to the normal execution unit 1000 when using the lock function provided by the OS 1020, there are also other cases that require a transition of processing to the normal execution unit 1000.
For example, if the secure interpreter 2210 invokes the Java (TM) native library 1150, processing must move to the normal execution unit 1000 since the Java (TM) native library 1150 only exists in the normal execution unit 1000

As described above, even if an unauthorized user uses a debugger etc. to try to eavesdrop on or tamper with a Java (TM) application, the bytecode cannot be accessed due to being stored in only the bytecode storage unit 2600 of the protected execution unit 2000, and therefore the bytecode cannot be eavesdropped on or tampered with.

### Embodiment 2

In embodiment 1, all of the bytecode of a method is stored and executed in the protected execution unit 2000. However, embodiment 2 is different in that only a portion of the bytecode is stored and executed in the protected execution unit 2000.

The execution apparatus of the present embodiment is effectively particularly in a case in which the protected execution unit cannot access the memory of the normal execution unit.
In other words, since the description of embodiment 1 is based on the assumption that access from the second CPU 2900 to the first RAM 1910 is possible, the protected execution unit can easily access the meta information in the memory of the normal execution unit when executing bytecode.

However, if the second CPU 2900 cannot access the first RAM 1910, processing must move to the normal execution unit 1000 each time meta information is needed, and also when reading or writing data to/from the Java (TM) heap, which is impractical in terms of execution speed.
In view of this, the present embodiment describes an execution apparatus that maintains the execution speed while protecting bytecode from unauthorized users, even if the second CPU 2900 cannot access the first RAM 1910.

The following describes points that differ from embodiment 1.

### Structure

Fig.21 is a functional block diagram showing the structure of the execution apparatus of embodiment 2.
The structure of the execution apparatus of embodiment 2 is substantially the same as the execution apparatus of embodiment 2 (see Fig.4). However, the functions of a portion of the functional units are different since the protected execution device 2000 cannot directly access the memory of the normal execution device 1000.

The following describes points that differ from the execution apparatus of embodiment 2.
An execution apparatus 500 is constituted from a normal execution unit 5000 and a protected execution unit 6000.
The normal execution unit 5000 includes the application storage unit 1200, a virtual machine 5100, the class storage unit 1300, the work area 1400, and the first CPU 1900.
The application storage unit 1200, the class storage unit 1300, the work area 1400, and the first CPU 1900 are the same as in embodiment 1.

The virtual machine 5100 includes a loader 5120 and an interpreter 5110 that have basically the same functions as the loader 1120 and the interpreter 1110 of embodiment 1 respectively.
During the execution of a class, the interpreter 1110 of embodiment 1 judges whether bytecode is stored in the normal execution unit 1000 or the protected execution unit 2000 with reference to a bytecode split flag in meta information (see Figs. 12 and 13). In contrast, the interpreter 5110 of the present embodiment references a split flag in the bytecode. A method of setting a split flag in the bytecode is described later under the heading "Method for selecting a code portion that does not require meta information etc.".

Also, if a class to be loaded is encrypted, the loader 1120 of embodiment 1 passes the address and size of the class file, and requests the protected execution unit 2000 to read the class file. In contrast, the loader 5120 of the present embodiment reads and passes the encrypted class file itself. This is because the protected execution unit 6000 cannot access the application storage unit 12000 that stores the class file.

The protected execution unit 6000 includes a decryption processing unit 6100, the decrypted class storage unit 2400, the encryption key storage unit 2500, a bytecode processing unit 6200, the bytecode storage unit 2600, a work area 6700, and the second CPU 2900.
The decrypted class storage unit 2400, the encryption key storage unit 2500, the bytecode storage unit 2600, and the second CPU 2900 are the same as in embodiment 1.

The decryption processing unit 6100 basically decrypts class files in the same way as the decryption processing unit 2100 of embodiment 1, but differs in that the decryption processing unit 2100 decrypts class files that it has read from the application storage unit 1200, whereas the decryption processing unit 6100 decrypts class files that have been passed from the normal execution unit 5000.
The bytecode processing unit 6200 includes a secure interpreter 6210 and a secure loader 6220.

During execution, the secure interpreter 2210 accesses heaps and meta information stored in the memory of the normal execution unit 1000, whereas the secure interpreter 6210 does not access meta information etc. during execution.
Also, the secure loader 2220 directly writes meta information to the class storage unit 1300, whereas the secure loader 5220 must first output meta information to the normal execution unit 5000 via the second CPU 2900, and the meta information must be written by the first CPU 1900.

The work area 6700 has the same functions as the work area 1400 of the normal execution unit 5000.
In embodiment 1, a frame area necessary for the execution of bytecode is generated in the work area 1400 that has been reserved in the first RAM 1910, whereas in the present embodiment, the frame area is reserved in the second RAM 2910 of the protected execution unit 6000 since the second CPU 2900 cannot access the first RAM 1910. Note that similarly to embodiment 1, the heap area is reserved in the work area 1400 of the normal execution unit 5000.

### Operations

The following describes the operations of the execution apparatus of the present embodiment in two phases, namely application loading and application execution.

### Class load processing

The following describes processing for loading a classes, that is to say, processing for converting a class file of the application program 1210 into an internal format that is executable by the virtual machine 5100, and loading the converted class file.

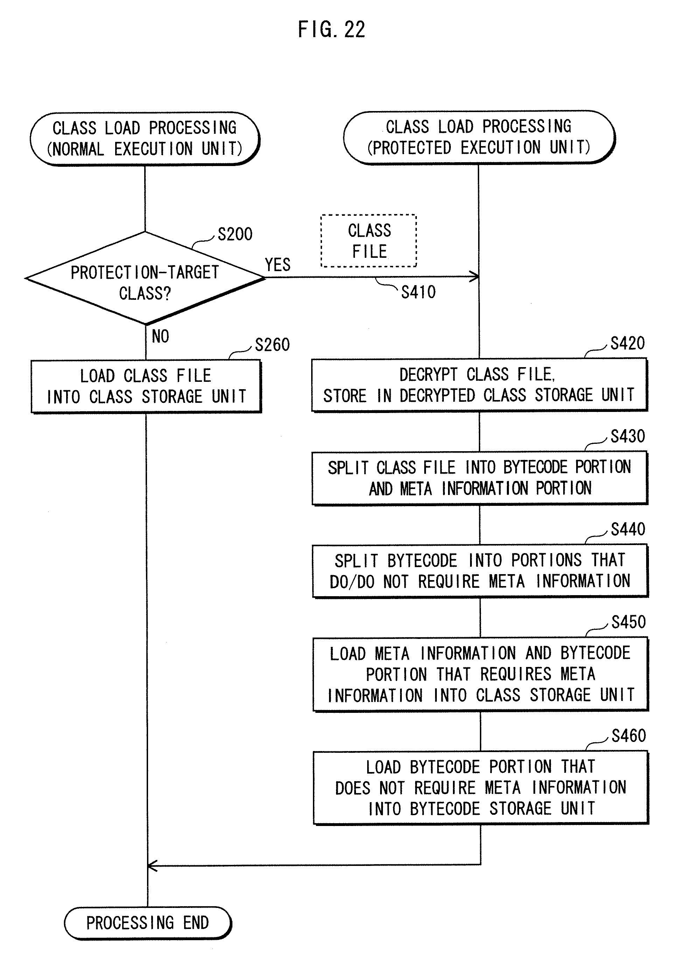

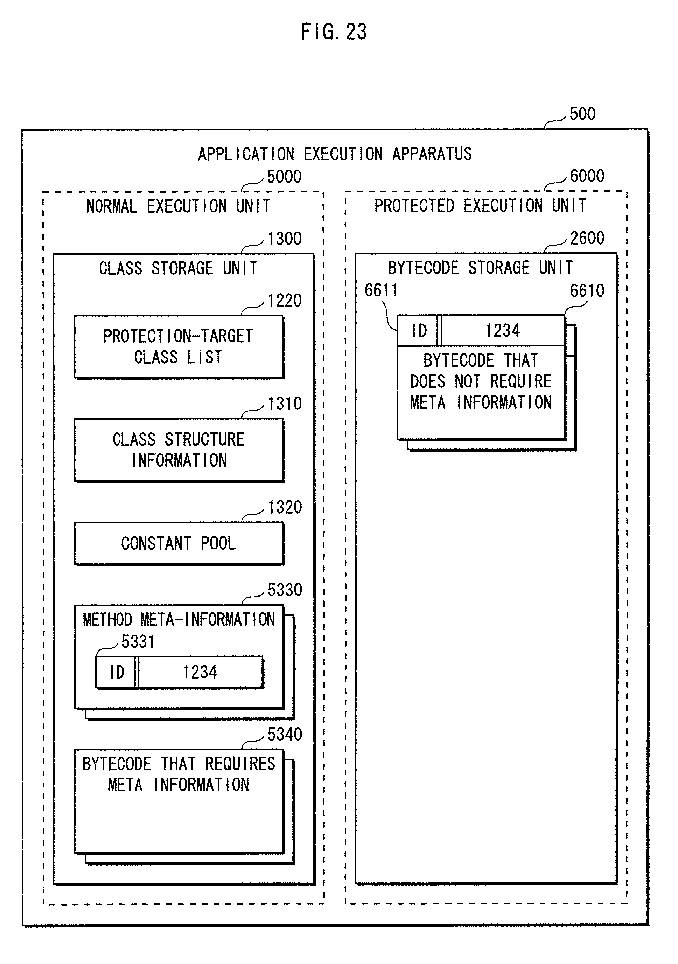

Fig.22 is a flowchart showing load processing performed by the execution apparatus 500. The load processing of Fig.22 is performed by the loader 5120 of the normal execution unit 5000 and the secure loader 6220 of the protected execution unit 6000.
Also, Fig.23 shows statuses of the bytecode storage unit 2600 and the class storage unit 1300 that has been loaded with a protection-target class file.

First, the interpreter 5110 passes a class file name along with a load request to the loader 5120, which upon receiving the request, judges whether the class corresponding to the received class file name is an encrypted class (step S200), and if the class is judged to not be a protection-target class (step S200:NO), loads the class into the class storage unit 1300 (step S260).

However, if the class pertaining to the load request is judged to be a protection-target class (step S200:YES), the loader 5120 reads the class from the application storage unit 1200 and passes the read class file to the decryption processing unit 6100 (step S410).
Upon receiving the class file, the decryption processing unit 6100 decrypts the class file with use of the decryption key 2923 stored in the encryption key storage unit 2500, and stores the resulting decrypted class file in the decrypted class storage unit 2400 (step S420).

Upon generating the decrypted class file, the decryption processing unit 6100 notifies the bytecode processing unit 6200 to that effect. Upon receiving such notification, the bytecode processing unit 6200 causes the secure verifier 2230 to check the decrypted class file, and requests the secure loader 6220 to load the decrypted class file.
Upon receiving the load request, the secure loader 6220 analyzes the syntax of the decrypted class file, and converts the decrypted class file to an internal format that is executable by the virtual machine 5100. Here, the secure loader 6220 distinguishes between the bytecode portion and the meta information portion based on the tag of the decrypted class file, and splits the decrypted class file into the bytecode portion and the meta information portion (step S430).

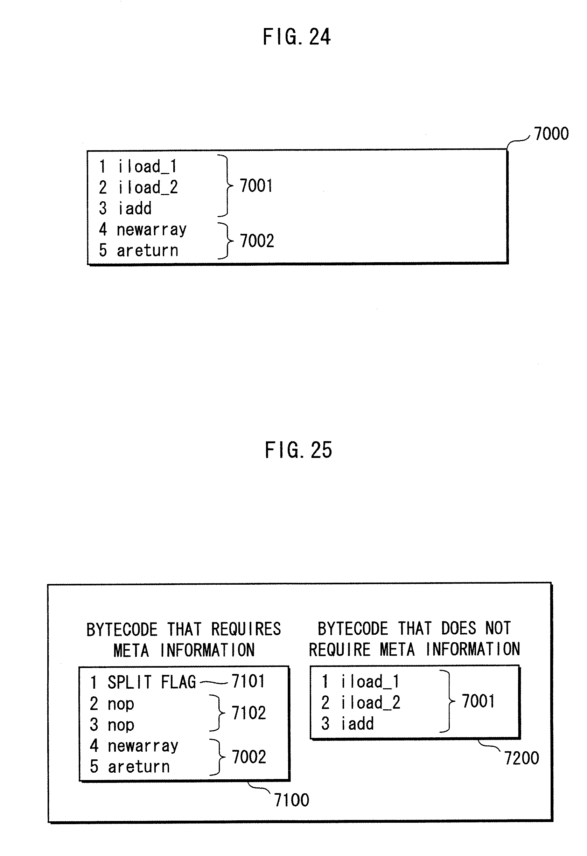

Next, the secure loader 6220 selects, from the bytecode, a bytecode portion that does not require meta information or access to a Java (TM) heap during execution. The method for selecting the bytecode portion that does not require meta information etc. is described further below with reference to Fig.24.
The secure loader 6220 splits the bytecode into bytecode that does and does not require meta information (step S440).

Upon splitting the bytecode into bytecode that does and does not require meta information, the secure loader 6220 requests the bytecode management unit 2250 to add IDs to the method meta-information and the bytecode that does not require method meta-information to associate the two together (see ID 5331 and ID 6611 of Fig.23).
Next, the secure loader 6220 transfers the meta information and bytecode that requires meta information etc. to the first CPU 1900 via the second CPU 2900. Upon reception thereof, the first CPU 1900 loads the meta information (class structure information 1310, constant pool 1320, method meta-information 5330 of Fig.23) and the bytecode 5340 that requires meta information etc. (see Fig.23) into the class storage unit 1300 (step S450).

Also, the secure loader 5220 loads the bytecode 6610 that does not require meta information into the bytecode storage unit 2600 (step S460).

### Method for selecting a code portion that does not require meta information etc.

In addition to the method for selecting a code portion that does not require meta information etc., the following describes the setting of a split flag, with reference to bytecode 7000 shown in Fig.24.

In Fig.24, "iload_1" on line 1 and "iload_2" on line 2 are instructions for stacking the first values in the local variable area on the operand stack, and do not require meta information. The operand stack is an area in the frame area of the work area 6700.
Also, "iadd" on line 3 is an instruction for adding the values on the operand stack, and does not require meta information.

Therefore, bytecode 7001, which is from line 1 to line 3 of the bytecode 7000, includes instructions that do not require meta information.
"newarray" on line 4 is an instruction for reserving an area in the Java (TM) heap in the work area 1400, and therefore requires a Java (TM) heap.
"areturn" on the last line is an instruction for performing method post-processing, and requires meta information.

Therefore, bytecode 7002, which is from line 4 to line 5 of the bytecode 7000, includes instructions that require meta information and access to a Java (TM) heap.
Fig.25 shows examples of split bytecode.
Bytecode 7200 that does not require meta information is generated from the bytecode 7001 that is the first three lines of the bytecode 7000. These three consecutive lines of bytecode are cut away as one piece of bytecode. The present embodiment describes an example in which one piece is cut away from the method.

Also, bytecode 7100 that requires meta information is generated from the bytecode 7000 after the code portion that was cut away as the bytecode 7200 that does not require meta information has been rewritten.
In the bytecode 7100 that requires meta information, a split flag 7101 which indicates code that has been split is embedded at the head of the portion that was split away. Specifically, predetermined instruction code that identifies itself as a split flag is described as the split flag 7101.

Meaningless code 7102 such as a nop instruction is embedded in portions of the split away code other than the head, that is to say, in the code portion corresponding to the code portion that is stored in the bytecode storage unit 2600.
The above structure enables a portion of bytecode in a class file to be loaded into an area that cannot be analyzed by a debugger etc.
Note that if there are two or more bytecode portions that do not require meta information in a method, execution thereof is enabled by associating the split flag 7101 with such bytecode portions. For example, the same ID may be assigned to the split flag and the corresponding bytecode portions.

### Class execution processing

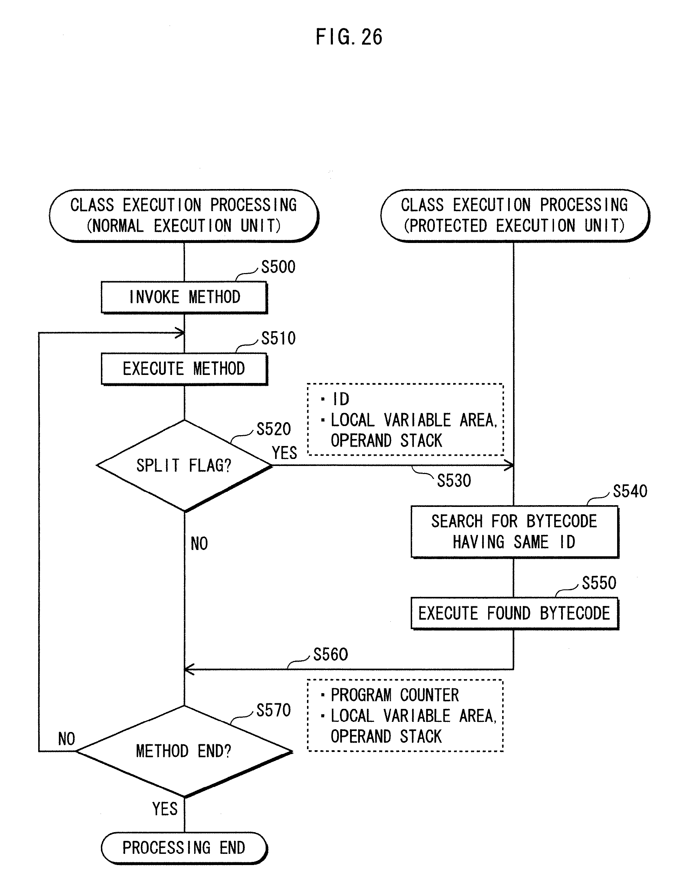

The following describes processing by which the execution apparatus 500 executes the bytecode 7000, with reference to Fig.26.
Fig.26 is a flowchart showing class execution processing.
First, in the execution of a class, the interpreter 5110 invokes a method (step S500).

The interpreter 5110 creates a Java (TM) frame in the work area 1400 for the method to be presently executed, and begins executing the bytecode 7100 that requires meta information (step S510).
Then, the interpreter 5110 fetches an instruction, and judges whether the fetched instruction is the split flag 7101 (step S520).

If the fetched instruction is not the split flag 7101 (step S520:NO), that is to say, if the fetched instruction is other instruction code, and furthermore if the method has not ended (step S570:NO), the fetched instruction is executed in the normal execution unit 5000 (step S510).
If the fetched instruction is the split flag 7101 (step S520:YES), the interpreter 5110 requests the bytecode processing unit 6200 in the protected execution unit 6000 to process the fetched instruction (step S530). When performing such request, the operand stack and the local variable area in the Java (TM) frame of the method being executed as well as the value of the ID 5331 in the method meta-information 5330 are passed as arguments.

The secure interpreter 6210 of the bytecode processing unit 6200 that received the request passes the value of the received ID 5331 to the bytecode management unit 2250, and requests the bytecode management unit 2250 to search for bytecode having the same ID value.
The bytecode management unit 2250 searches the bytecode storage unit 2600 for the bytecode 6610 that does not require meta information and has the ID 6611 that matches the value of the received ID 5331 (step S540).

Upon finding the bytecode 6610 that does not require meta information and whose ID value matches the ID 5331 value, the bytecode management unit 2250 notifies the address of the bytecode 6610 to the secure interpreter 6210. The address is, for example, the address of the bytecode 7200 of Fig.25 that does not require meta information.
The secure interpreter 6210 performs the processing of the bytecode 6610 that does not require meta information with use of the local variable area and operand stack that were received as arguments (step S550).

During the execution of the bytecode 6610 that does not require meta information, all processing can be performed in the bytecode processing unit 6200 since reading data from and writing data to the memory of the normal execution unit 5000 is not necessary.
When the execution of the bytecode 6610 that does not require meta information has been completed, the local variable area, the operand stack, and a program counter indicating an instruction to be executed next by the interpreter 5110 of the normal execution unit 5000 are set as return values, and processing is reverted to the interpreter 5110 (step S560).

The interpreter 5110 continues execution from the program counter received as a return value of the bytecode 6610 that does not require meta information (step S570, step S510).
The processing thereafter is the same as in a conventional Java (TM) virtual machine.

### Embodiment 3

In an execution apparatus of embodiment 3, a normal execution unit and a protected execution unit can both operate at the same time by multitasking.

Embodiments 1 and 2 are based on the assumption that the first and second CPUs operate alternately.
The present embodiment describes a system in which the execution apparatus protects an application while the first and second CPUs are operating at the same time.

### Structure

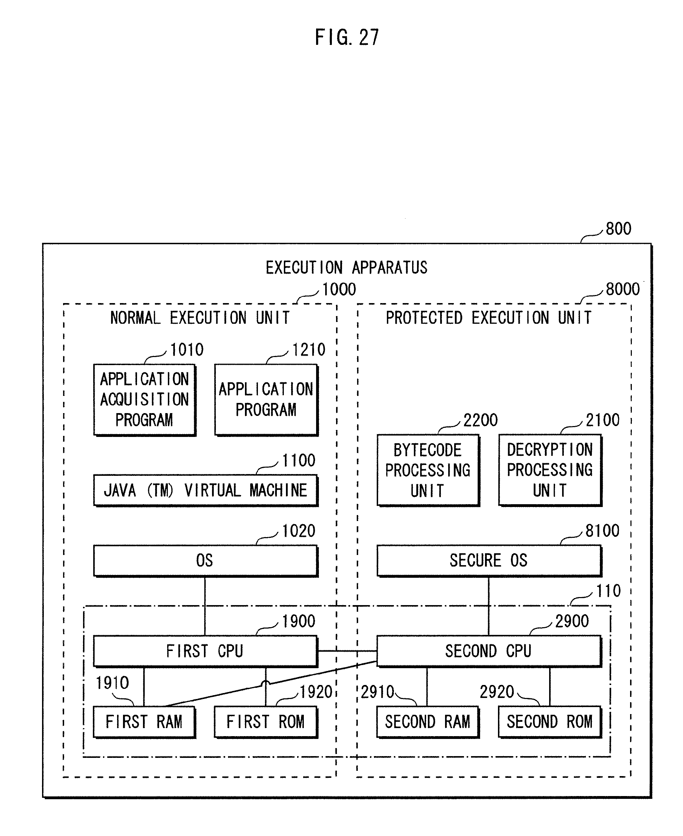

Fig.27 shows an exemplary structure of an execution apparatus 800 of the present embodiment.

The execution apparatus 800 has the same structure as in embodiment 1 (see Fig.1), with the exception of a secure OS 8100.
Similarly to embodiment 1, the second CPU 2900 can read from and write to the first RAM 1910 in the normal execution unit 1000.
Also, the second CPU 2900 is a physically different CPU from the first CPU 1900.

The following description pertains to only the secure OS 8100.
The secure OS 8100 runs on the second CPU 2900 in the protected execution unit 8000, and is an OS that supports multitasking, such as Linux.
In the following description, processing of the same thread is not performed in the protected execution unit 8000 and the normal execution unit 1000 at the same time.

### Structure

The following describes a method by which the execution apparatus 800 executes an application.
The class file load processing performed before execution is the same as in embodiment 1 (see Fig. 11 etc.). Also, since the functional blocks are the same as in embodiment 1, the operations of the execution apparatus of the present invention are described with reference to Fig. 4.

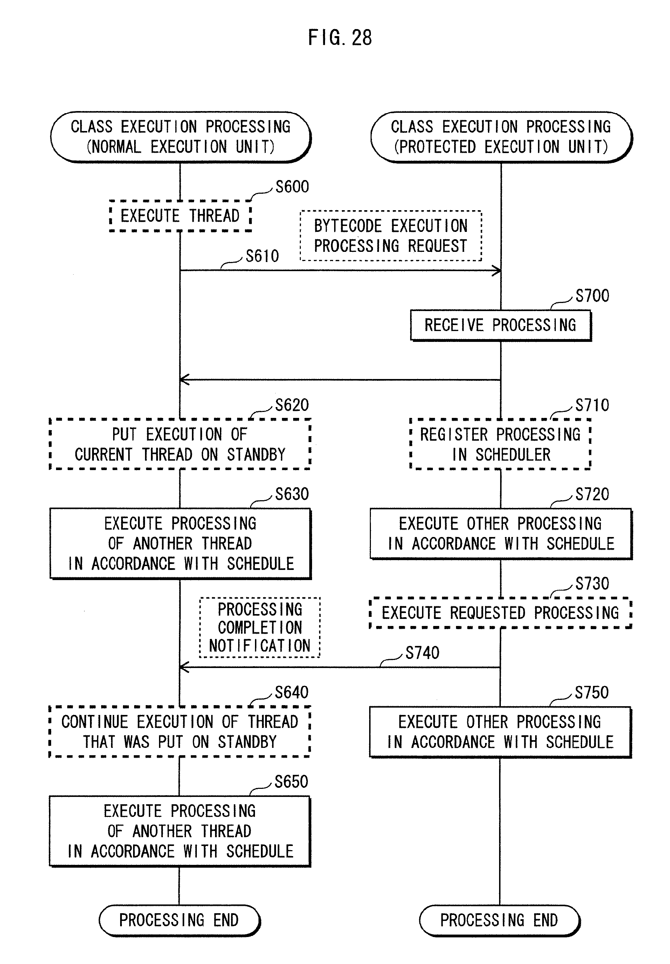

Fig.28 is a flowchart showing class execution processing of embodiment 3.
The steps enclosed in dashed lines show processing related to the execution of a class that is a target.
The interpreter 1110 of the normal execution unit 1000 begins thread execution (step S600), and if the thread is a method of a protection-target class, the interpreter 1110 requests the protected execution unit 8000 to process the thread. Hereinafter, this requested processing is called "the aforementioned processing".

The interpreter 1110 requests, via the OS 1020, the secure OS 8100 of the protected execution unit 8000 to perform the aforementioned processing (step S610).
The secure OS 8100 temporarily stops the processing performed by the protected execution unit 8000, receives the processing of the thread pertaining to the request (step S700), and notifies the OS 1020 that the processing has been received.

Here, the interpreter 1110 of the normal execution unit 1000 puts the thread pertaining to the requested processing on standby until a processing completion notification has been received from the protected execution unit 8000 (step S620).
In the processing thereafter, the normal execution unit 1000 and protected execution unit 8000 begin operations in parallel.
The secure OS 8100 passes the aforementioned processing to the scheduler of the secure OS 8100, and the scheduler registers the aforementioned processing (step S710). The scheduler of the secure OS 8100 manages when the aforementioned processing is begun.

The interpreter 1110 of the normal execution unit 1000 executes the processing of another thread (step S630).
Meanwhile, the bytecode management unit 2200 of the protected execution unit 8000 also passes its processing to the scheduler, and thereafter continues the processing that was being executed before the aforementioned processing was received (step S720).

Thereafter, the bytecode management unit 2200 in the protected execution unit 8000 receives, from the scheduler, a notification to begin the aforementioned processing, and begins executing the aforementioned processing (step S730).
Upon detecting that the bytecode management unit 2200 has completed the execution of the aforementioned processing, the secure OS 8100 notifies the OS 1020 of the normal execution unit 1000 that requested processing has been completed (step S740).

Upon receiving the completion notification from the protected execution unit 8000, the interpreter 1110 of the normal execution unit 1000 again begins executing the processing that had been put on standby (step S640).
Thereafter, other processing is performed in the normal execution unit 1000 and protected execution unit 8000 in accordance with instructions from the schedulers (step S650, step S750).
As described above, bytecode is stored in only the protected execution unit 8000, thereby preventing wrongful actions, as well as improving the execution speed since the two CPUs operate in parallel.

Note that although all bytecode is stored in the second RAM and executed in the protected execution unit in embodiment 3, the present invention can be practiced even if only a portion of the bytecode is stored in the second RAM as in embodiment 2.

### Supplementary remarks

Although an execution apparatus of the present invention has been described based on the above embodiments, the execution apparatus can be partially modified, and the present invention is of course not limited to the above embodiments. Modifications such as the following are also included in the present invention.
(1) Although a protection-target class list is referenced when judging whether a class file is encrypted in the above embodiments, other methods may be used.

For example, instead of using a protection-target class list, the above judgment may be performed based on a difference from a normal class file, such as certain code not being included in a certain place in a class file. Also, the validity of a class file may be verified in the decryption process. This has the advantages of preventing errors during execution and being able to stop the execution itself.
Also, in the case of downloading an application, information for performing the judgment may be included in a separate file that is downloaded. If the application is sent via a broadcast, the judgment may be performed with use of a file that is multiplexed with the application.

Furthermore, an application program developer may add a certain character string to the class file name of a class that requires protection, and whether or not a class requires protection during execution may be judged based on the class file name.
Furthermore, although the classes indicated in the protection-target class list are classes that are encrypted and require protection in the above embodiments, not all classes that are encrypted need to be indicated. Only classes that a creator desires to be protected may be indicated in the protection-target class list.

In such a case, the normal execution device, for example, also includes a decryption functional block, and decrypts encrypted classes that are not indicated in the protection-target class list before execution.
Also, although class file names of the application are indicated in the protection-target class list in the above embodiments, the protection-target class list may indicate, for example, class names included in a class library in the Java (TM) virtual machine.

Also, although entire classes are encrypted in the above embodiments, only bytecode in classes may be encrypted. In such a case, only bytecode may be sent to the protected execution unit.
Also, although the above embodiments describe a case in which there is only one encryption key, a plurality of encryption keys may be used when necessary. In such a case, for example, information specifying which encryption keys are to be used is included in the protection-target class list, and a class is decrypted with use of the encryption key specified by the corresponding information.
(2) Although a bytecode split flag is provided in method meta-information in Embodiment 1, bytecode split flags may be provided in another place.

For example, a flag may be provided in the class information structure information (see Fig.12 etc.).
(3) Although a processing request is sent to the protected execution unit only when processing needs to be performed by the protected execution unit in embodiments 1, 2 and 3, a processing request may be sent to the protected execution unit even when the processing does not need to be performed by the protected execution unit, and the protected execution unit may return the processing to the normal execution unit without having performed any of the processing.

Necessarily moving control to the protected execution unit during the execution of a class has the effect of making it difficult to specify which classes are truly protection-target classes.
In the above embodiments, the Java (TM) application to be executed and the virtual machine are placed in the memory of the normal execution unit, and when loading a class file, a judgment is made as to whether the bytecode is to be executed by the protected execution unit. However, bytecode to be protected may be stored in the second ROM in advance, and loaded into the second RAM during execution. In such a case, it is necessary to pre-set information associating the meta information and the bytecode together, such as an ID.
(4) Although the first CPU 1900 of the execution apparatus 100 and the second CPU 2900 of the protected execution unit 2000 are physically different CPUs in embodiments 1 and 2, a single physical CPU may virtually act as two CPUs by a method such as switching operation modes. Also, in the case of a CPU having a plurality of CPU cores in a single CPU package, such as a multi-core CPU, a specified one of the cores may be caused to operate as the second CPU.

Also, although the normal execution unit 1000 and the protected execution unit 2000 each have a RAM and a ROM in the above embodiments, a single RAM may be virtually treated as two RAMs. Similarly, a single ROM may be virtually treated as two ROMs . Furthermore, the ROM in the protected execution unit 2000 may be incorporated in the second CPU 2900.
(5) Although the application executed by the execution unit 100 is downloaded from a server on the Internet by the application acquisition program 1010, the application may be acquired by another method.

For example, a Java (TM) application may be embedded in an MPEG2 (Moving Picture Coding Experts Group) transport stream in the data broadcast of a digital broadcast.
In such a case, the application acquisition program 1010 is a program for reading the Java (TM) application embedded in the transport stream to the execution apparatus 100.

One example of a method for embedding a Java (TM) program in an MPEG2 transport stream is the DSMCC system. The DSMCC scheme is a method of encoding a file system, which is constituted from directories and files to be used by a computer, in the packets of an MPEG2 transport stream (see MPEG Standards ISO/IEC 138181-1, MPEG Standards ISO/IEC 138181-6).

Furthermore, the application executed by the execution apparatus 100 may be a Java (TM) application stored on an SD card (secure Digital memory card), CD-ROM (Compact Disk Read Only Memory), DVD (Digital Versatile Disk), Blu-Ray Disc, or the like.
In such a case, the application acquisition program 1010 is a program for reading the application from such recording media such as the above.

Also, the application executed by the execution apparatus 100 may be a Java (TM) application recorded in the ROM etc. in the execution apparatus 100.
In such a case, the application acquisition program 1010 is a program for reading the Java (TM) application from the ROM to a work memory.
Furthermore, in recent years, a function for downloading and executing a program written in Java (TM) has been increasingly included in electronic devices such as digital TVs and mobile phones. For example, NTT DoCoMo provides a service called i-appli for mobile phones. In this service, a mobile phone terminal downloads a Java (TM) program from an application distribution server on the Internet, and executes the Java (TM) program. Also, a specification called DVB-MHP (Digital Video Broadcasting - Multimedia Home Platform) has been developed in Europe, and operations compliant with this specification have already begun. In a digital broadcast based on the DVB-MHP standard, a Java (TM) program multiplexed in a broadcast wave is received and executed by a TV.

In such a case, the application acquisition program 1010 is a program that downloads a Java (TM) application in accordance with a protocol such as TLS (Transport Layer Security) or HTTP (Hypertext Transfer Protocol).
TLS is a data transfer scheme that uses encryption to prevent eavesdropping on and tampering with data during communication (see RFC 2246). Also, HTTP is a commonly used data transfer scheme for data communication via the Internet (see RFC 2616).

Note that RFC (Request For Comments) are official documents of the IETF (Internet Engineering Task Force) which standardizes Internet technology, and these documents describe the uses of various technologies such as protocols.
(6) In the above embodiments, the application acquisition program 1010 and the like may be a Java (TM) program written in the Java (TM) language, or may be realized as a program written in a native language or as hardware.

The application executed by the virtual machine is not limited to be written in Java (TM), but instead may be written in another object-oriented language such as C++. Also, the Java (TM) virtual machine itself may be written in an object-oriented language or a non object-oriented language.
(7) The protected execution unit 2000 of the above embodiments can be realized by using TrustZone (TM) technology of ARM, Inc.

In TrustZone (TM) technology, a portion of hardware resources such as RAM and ROM is virtually assigned to an execution environment called a secure domain. The RAM or ROM assigned to the secure domain can only be used by programs run in the secure domain, and therefore cannot in any way be used by programs not run in the secure domain.

Conventional CPUs have two types of modes, namely a normal mode in which applications run and a privileged mode in which an OS etc. runs, and a program running in the normal mode cannot tamper with a program running in the privileged mode.
TrustZone (TM) technology further provides a special mode called monitor mode. The CPU can transition to the monitor mode by executing a special instruction. When the CPU is running in the monitor mode, security information called S-bit is notified to peripheral hardware such as the RAM and ROM. RAM and ROM that are compliant with TrustZone (TM) technology permit the reading/writing of data from/to the area assigned to the secure domain, only when the S-bit has been notified. Also, the reading/writing of data from/to areas not assigned to the secure domain is permitted regardless of whether the S-bit has been notified. In this way, a secure execution unit can be realized by a secure domain.

Also, LaGrande technology of Intel, Inc. provides a similar function to Trustzone (TM) technology, for virtually separating a domain in which normal applications and an OS are run and a domain in which applications requiring protection are run. A secure execution unit can also be realized by using such technology.
(8) Although included in the execution apparatus 100 in the above embodiments, the protected execution unit 2000 may be a smart card or IC card that can be removed from the execution apparatus 100. Such a smart card or IC card may include a CPU, memory, and a security circuit.

The entirety of the protected execution unit 2000 may be realized by hardware.
In such a case, data communication between the first and second CPUs must be encrypted to prevent eavesdropping by a third party. Specifically, when transmitting data via a data bus connecting the two CPUs, the data is encrypted before transmission, and decrypted after reception.
(9) Although the above embodiments describe an exemplary case of a Java (TM) virtual machine, the application execution environment may be another execution environment, or may be an OS.

Furthermore, if the application corresponds to an execution environment program, the application itself may be targeted as bytecode to be kept confidential.
(10) A program for causing a CPU to execute control processing for realizing the functions of the execution apparatuses described in the above embodiments (see Fig.4 etc.) can be distributed via recording to a recording medium or via various communication channels. Such a recording medium may be an IC card, optical disk, flexible disk, ROM, flash memory, or the like. The distributed program is provided for use by being stored in a memory etc. that is readable by a CPU in a device, and the functions of the execution apparatuses described in the above embodiments are realized as the CPU executes the program.
(11) The protected execution unit (2000, 6000, 8000) of the execution apparatus is realized by an LSI, which is typically an integrated circuit. The structures of the above embodiments may be integrated on separate chips, or all or some of the structures may be integrated on a single chip.

Note that an integrated circuit generated as described above may also be referred to as an IC, a system LSI, a super LSI, or an ultra LSI, depending on the degree of integration.
Also, the method used to realize the integrated circuit is not limited to LSI. The integrated circuit may be realized by a special-purpose circuit or a general-purpose processor. Moreover, an FPGA (Field Programmable Gate Array) that can be programmed after LSI manufacture, a reconfigurable processor in which it is possible to restructure settings and connections of circuit cells in the LSI, or the like may be used.

Furthermore, if integration technology is developed that replaces LSIs due to progressive or derivative semiconductor technology, integration of functional blocks using this technology is naturally possible. For example, the application of biotechnology is a possibility.

### INDUSTRIAL APPLICABILITY

An application execution apparatus of the present invention hides bytecode necessary for the execution or analysis of an application in a protected execution unit that is realized by hardware etc. and makes eavesdropping and tampering difficult, thereby protecting the application from eavesdropping and tampering during execution, and protecting creators' rights etc. on content in an application download distribution industry that is expected to undergo full-scale expansion in the near future.

## Claims

1. A program execution apparatus for executing an application program that is written in an object-oriented language and includes one or more classes, each including execution code, comprising:
a first execution device including a memory and a processor;
a tamper-resistant second execution device including a memory and a processor; and
a loader operable to, in loading an execution-target class from among the one or more classes, load a portion or all of the execution code of the execution-target class into the memory of the second execution device, and load, into the memory of the first execution device, a portion of the execution-target class other than the portion or all of the execution code that was loaded into the memory of the second execution device.

2. The program execution apparatus of claim 1, wherein
a portion or all of the execution code of the execution-target class has been encrypted,
the program execution apparatus further comprises:
a decryption unit operable to decrypt encrypted information, and
the loader causes the decryption unit to decrypt the portion or all of the execution code that has been encrypted to obtain decrypted execution code, and loads the decrypted execution code into the memory of the second execution device.

3. The program execution apparatus of claim 1, wherein
one or more of the classes included in the application program has been encrypted,
the first execution device further includes a judgment unit operable to judge whether the execution-target class has been encrypted,
the second execution device further includes a decryption unit operable to decrypt the encrypted execution-target class that is stored in an internal memory,
the loader includes a first loader that is executed by the processor of the first execution device, and a second loader that is executed by the processor of the second execution device,
the first loader causes the judgment unit to perform the judgment, and if the execution-target class has been judged to not be encrypted, loads the execution-target class into the memory of the first execution device, and if the execution-target class has been judged to be encrypted, causes the execution-target class to be stored in the memory of the second execution device, and
the second loader causes the decryption unit to decrypt the encrypted execution-target class that is stored in the memory of the second execution device to obtain a decrypted class, loads a portion or all of the execution code of the decrypted class into the memory of the second execution device, and loads, into the memory of the first execution device, a portion of the decrypted class other than the portion or all of the execution code that was loaded into the memory of the second execution device, in correspondence with the portion or all of the execution code of the decrypted class.

4. The program execution apparatus of claim 3, further comprising:
a control unit operable to control class execution, wherein
the control unit causes the processor of the first execution device to execute the execution-target class stored in the first execution device, and if execution-target execution code of the execution-target class is not stored in the memory of the first execution device, causes the processor of the second execution device to execute the execution code that is stored in the memory of the second execution device and that corresponds to the execution-target execution code of the execution-target class.

5. An execution device that is tamper resistant and is included in a program execution apparatus for executing an application program that is written in an object-oriented language and includes one or more classes, each including execution code, the execution device comprising:
a memory;
a processor;
a decryption unit operable to decrypt an encrypted class that is stored in the memory; and
a loader operable to cause the decryption unit to decrypt the encrypted class that is stored in the memory to obtain a decrypted class, load a portion or all of the execution code of the decrypted class into the memory, and load, into a memory external to the execution device, a portion of the decrypted class other than the portion or all of the execution code loaded into the memory, in correspondence with the execution code loaded into the memory.

6. A computer program for causing load processing to be performed by an execution device that is tamper resistant, includes a memory and processor, and is included in a program execution apparatus for executing an application program that is written in an object-oriented language and includes one more classes, each including execution code, the computer program including the steps of:
decrypting an encrypted class stored in the memory; and
causing the encrypted class that is stored in the memory to be decrypted in the decryption step to obtain a decrypted class, loading a portion or all of the execution code of the decrypted class into the memory, and loading, into a memory external to the execution device, a portion of the decrypted class other than the portion or all of the execution code loaded into the memory, in correspondence with the execution code loaded into the memory.

7. An integrated circuit that is tamper resistant and is included in a program execution apparatus for executing an application program that is written in an object-oriented language and includes one or more classes, each including execution code, the integrated circuit comprising:
a memory;
a processor;
a decryption unit operable to decrypt an encrypted class that is stored in the memory; and
a loader operable to cause the decryption unit to decrypt the encrypted class that is stored in the memory to obtain a decrypted class, load a portion or all of the execution code of the decrypted class into the memory, and load, into a memory external to the execution device, a portion of the decrypted class other than the portion or all of the execution code loaded into the memory, in correspondence with the execution code loaded into the memory.
